# EUROPÄISCHE PATENTSCHRIFT

(11) **EP 1 134 107 B1**
(45) Veröffentlichungstag und Bekanntmachung des Hinweises auf die Patenterteilung: **11.11.2009**
(21) Anmeldenummer: 01105927.6
(22) Anmeldetag: 09.03.2001
(51) Int. Cl.: B60J 7/22

(54) **Abschirmelement für Kraftfahrzeuge**
Shielding element for motor vehicles
Elément de blindage pour véhicules automobiles

(30) Priorität: 13.03.2000 DE 10012167
(43) Veröffentlichungstag der Anmeldung: 19.09.2001
(73) Patentinhaber: SCAMBIA Industrial Developments Aktiengesellschaft, 9494 Schaan (LI)
(72) Erfinder: Götz, Matthias, 71706 Markgröningen (DE); Riehle, Jörg, 70439 Stuttgart (DE)
(74) Vertreter: Beck, Jürgen

(56) Entgegenhaltungen:
- US-A- 4 296 962
- US-A- 5 253 829
- US-A- 5 702 150
- US-A- 5 738 404
- US-A- 5 803 530

## Beschreibung

Die Erfindung betrifft ein Abschirmelement für Kraftfahrzeuge, insbesondere ein Windschott oder einen Sonnenschutz, umfassend einen Rahmen und ein vom Rahmen gehaltenes und sich über einen vom Rahmen umschlossenen Bereich erstreckendes Flachmaterialstück, wie beispielsweise in der US 5738404 beschrieben ist.

Derartige Abschirmelemente sind aus dem Stand der Technik bekannt. Bei diesen wird das Flachmaterialstück durch Kraftschluß, beispielsweise durch Einpressen eines elastischen Rings, an dem Rahmen fixiert.

Eine derartige Fixierung des Flachmaterialstücks wirft Probleme auf, da die Herstellung der kraftschlüssigen Verbindung kostenaufwendig ist und im übrigen die kraftschlüssige Verbindung nicht stets die erwünschte Dauerfestigkeit zeigt.

Der Erfindung liegt daher die Aufgabe zugrunde, ein Abschirmelement der gattungsgemäßen Art derart zu verbessern, daß dieses einfach herstellbar ist und eine möglichst dauerhafte Verbindung zwischen dem Flachmaterialstück und dem Rahmen aufweist.

Diese Aufgabe wird bei einem Abschirmelement der eingangs beschriebenen Art erfindungsgemäß durch die Merkmale des Patentanspruches 1 gelöst.

Der Vorteil der erfindungsgemäßen Lösung ist darin zu sehen, daß das Aufschmelzen des Kunststoffmaterials, vorzugsweise thermoplastischen Kunststoffmaterials, mittels einer Sonotrode eine einfache Möglichkeit bietet, das Flachmaterialstück einerseits kostengünstig und andererseits dauerhaft an dem Rahmen zu fixieren.

Das Rahmenteilelement ist mit dem Randbereich des Flachmaterialstücks verbunden, das heißt, daß durch das Aufweichen und Erstarren des Verbindungsbereichs eine direkte Verbindung zwischen dem Rahmenteilelement und dem Rand des Flachmaterialstücks herstellbar ist.

Diese Lösung ist besonders vorteilhaft, da sie eine sichere Fixierung des Flachmaterialstücks an dem Rahmen erlaubt, ohne daß eine aufwendige Verbindungstechnik einzusetzen ist.

Insbesondere erlaubt eine derartige Fixierung des Randbereichs des Flachmaterials an dem Rahmen eine Automatisierung der Herstellung und somit eine äußerst kostengünstige Herstellung.

Eine derartige Verbindung zwischen dem Randbereich des Flachmaterialstücks und dem Rahmenteilelement ist in unterschiedlichster Weise herstellbar.

Der Randbereich des Flachmaterialstücks ist in den durch die Sonotrode aufgeweichten und nachfolgend erstarrten Verbindungsbereich eingebettet. Das heißt, daß durch die Einwirkung der Sonotrode keine Veränderung des Materials des Flachmaterialstücks selbst erfolgt, sondern lediglich eine Einbettung desselben in den aufgeweichten und nachfolgend erstarrten Verbindungsbereich und somit eine Art formschlüssige Verbindung zwischen dem Randbereich des Flachmaterialstücks und dem Rahmenteilelement.

Eine besonders günstige Verbindung ist dabei dann herstellbar, wenn das Flachmaterial ein Gewebe oder Gewirke oder Geflecht ist, so daß das aufgeweichte oder aufgeschmolzene Kunststoffmaterial den Randbereich des Gewebes oder Gewirkes oder Geflechts durchtränkt und somit die Fasern desselben im wesentlichen unbeschädigt in den Verbindungsbereich einbettet, so daß eine äußerst dauerhafte formschlüssige Verbindung zwischen dem Randbereich des Flachmaterials und dem Rahmenteilelement herstellbar ist.

Alternativ dazu sieht eine weitere vorteilhafte Ausführungsform der Erfindung vor, daß das Flachmaterialstück aus Kunststoffmaterial hergestellt ist, welches durch Ultraschall ebenfalls aufheizbar, erweichbar und nachfolgend erstarrt ist, und mit dem Kunststoffmaterial des Rahmenteilelements durch Ineinanderfließen der aufgeweichten Kunststoffmaterialien eine Verbindung, beispielsweise eine Art Schweißverbindung, eingegangen ist.

Diese Lösung sieht dabei ausdrücklich die Veränderung der geometrischen Form des Materials des Flachmaterialstücks insoweit vor, als dieses ebenfalls aufschmilzt und somit eine innige Verbindung mit dem Kunststoffmaterial des Rahmenteilbereichs eingeht.

Im Fall von Fasern setzt dies voraus, daß die Fasern ihre Faserstruktur verlieren und insoweit, als sie durch die Verbindungsbereiche hindurchverlaufen, in den Verbindungsbereichen durch Erweichen eine innige Verbindung mit dem Kunststoffmaterial des Rahmenteilelements eingegangen sind.

Prinzipiell umfaßt die erfindungsgemäße Lösung auch all die Lösungen, bei welchen eine erfindungsgemäße Verbindung zwischen dem Randbereich des Flachmaterialstücks und dem Rahmen längs einer Verbindungslinie hergestellt ist, wobei sich damit der Verbindungsbereich längs der Verbindungslinie erstrecken kann.

Eine besonders bevorzugte Lösung sieht jedoch vor, daß der Randbereich des Flachmaterialstücks an dem Rahmenteilelement in längs einer Verbindungslinie aufeinanderfolgend mit Abstand angeordneten Verbindungsbereichen fixiert ist. Eine derartige Lösung hat den großen Vorteil, daß durch die mit Abstand angeordneten Verbindungsbereiche selbst im Fall einer Beschädigung des Randbereichs des Flachmaterialstücks, entweder durch Beschädigung der Fasern oder zu starkes aufweichen des Materials diese sich nicht längs der gesamten Verbindungslinie fortsetzen kann, sondern stets unterbrochen wird.

Darüber hinaus ist durch die im Abstand voneinander angeordneten Verbindungsbereiche die Wirkung des Ultraschalls noch besser und stärker lokalisiert, so daß auch das Herstellen der Verbindung zwischen dem Rahmenteilelement und dem jeweils anderen Teil definierter, insbesondere mit definiertem Aufweichen des Kunststoffmaterials, erfolgen kann.

Besonders günstig ist es dabei, wenn die Verbindungsbereiche in einem Abstand voneinander angeordnet sind, der größenordnungsmäßig der Erstreckung der Verbindungsbereiche in Richtung der Verbindungslinie entspricht.

Prinzipiell wäre es denkbar, die Verbindungsbereiche dadurch zu definieren, daß diese durch die Ultraschalleinwirkung, beispielsweise noch mit lokaler Pressung durch die Sonotrode entstehen.

Um jedoch auch hierbei eine undefinierte Ausbildung der Verbindungsbereiche zu vermeiden, ist vorzugsweise vorgesehen, daß die Verbindungsbereiche durch Kunststoffmaterialanhäufungen vorgegebenen sind. Derartige Kunststoffmaterialanhäufungen haben nicht nur den Vorteil, daß bei der Ausbildung der Verbindung eine gezielte lokale Einwirkung des Ultraschalls erreichbar ist, sondern auch den Vorteil, daß bei der sich dann ausbildenden Kunststoffschmelze ausreichend Material zur Verfügung steht, um eine sichere Verbindung zwischen dem Rahmenteilelement und dem entsprechenden Teil, das heißt dem Randbereich des Flachmaterials oder dem anderen zu verbindenden Teil, zu schaffen.

Insbesondere dann, wenn das Flachmaterial ein Gewebe oder Gewirke oder Geflecht ist, ist es vorteilhaft, wenn ausreichend Kunststoffmaterial für die Kunststoffmaterialschmelze zur Verfügung steht, das dann sicher den Randbereich des Gewebes oder Gewirkes oder Geflechts durchtränken und somit die Fasern einbetten kann.

Der Vorteil einer ausreichend großen zur Verfügung stehenden Menge von Kunststoffmaterial ist aber auch bei einem Aufschmelzen des Materials des Randbereichs des Flachmaterialstücks gegeben, da damit eine gute Verbindung der beiden schmelzenden Materialien möglich ist.

Das Vorliegen einer derartigen Kunststoffmaterialanhäufung kann in beliebiger Weise erreicht werden. Beispielsweise wäre es denkbar, zusätzlich Kunststoffmaterialteilchen oder Kunststoffmaterialpulver an den vorgesehenen Verbindungsbereichen vor Einwirkung der Sonotrode aufzubringen.

Besonders vorteilhaft läßt sich jedoch die später erwünschte Kunststoffmaterialanhäufung dann erhalten, wenn das Rahmenteilelement mit den die Verbindungsbereiche bildenden Kunststoffmaterialanhäufungen versehen ist.

Eine besonders vorteilhafte Ausführungsform der erfindungsgemäßen Lösung sieht vor, daß der Randbereich des Flachmaterials nur in den längs der Verbindungslinie aufeinanderfolgenden Verbindungsbereichen an dem Rahmenteilelement dauerhaft fixiert ist, das heißt, daß die dauerhafte Fixierung sich lediglich auf die Verbindung des Randbereichs des Flachmaterials mit dem entsprechenden Rahmenteilelement erstreckt und keine zusätzliche weitere dauerhafte Fixierung des Flachmaterials vorzusehen ist. Eine derartige Lösung hat sich als besonders kostengünstig erwiesen.

Im Zusammenhang mit den bislang beschriebenen Ausführungsformen wurde primär darauf abgestellt, daß das andere Teil, welches mit dem Rahmenteilelement zum Aufheizen und Aufweichen des Kunststoffs verbindbar sein soll, der Randbereich des Flachmaterials ist.

Eine andere vorteilhafte Lösung sieht jedoch vor, daß das andere Teil ein weiteres Rahmenteilelement des Rahmens ist und daß die Rahmenteilelemente durch einen durch Aufheizen und Aufweichen sowie Erstarren des Kunststoffmaterials mittels der Sonotrode gebildeten Verbindungsbereich dauerhaft miteinander verbunden sind.

Obwohl diese Lösung nicht zwingend eine erfindungsgemäße Verbindung durch Aufweichen des Kunststoffmaterials zwischen einem Rahmenteilelement und dem Randbereich des Flachmaterials vorsieht, eine derartige Verbindung jedoch nicht ausschließt, ist diese Lösung vorteilhaft, da in einfacher Weise durch Verbindung der beiden Rahmenteilelemente die Möglichkeit geschaffen werden kann, auch den Randbereich des Flachmaterialstücks vorteilhaft und insbesondere durch kostengünstige Herstellung dauerhaft zu fixieren.

Eine besonders günstige Realisierungsform sieht dabei vor, daß der Randbereich des Flachmaterialstücks durch Formschlußelemente mit dem Windschottrahmen verbunden ist, wobei diese Formschlußelemente dann zu einer sicheren Verbindung zwischen dem Rahmen und dem Randbereich des Flachmaterialstücks führen, wenn die dauerhaft über einen Verbindungsbereich miteinander verbundenen beiden Rahmenteilelemente verhindern, daß die das Flachmaterialstück am Windschottrahmen haltenden Formschlußelemente außer Eingriff kommen.

Alternativ dazu ist es aber auch denkbar, derartige Formschlußelemente noch zusätzlich zu all den Lösungen vorzusehen, bei denen der Randbereich des Flachmaterialstücks unmittelbar mit mindestens einem der Rahmenteilelemente durch Aufweichen und Erstarren des Kunststoffmaterials verbunden ist.

Bei einer derartigen formschlüssigen Verbindung zwischen dem Rahmen und dem Randbereich des Flachmaterialstücks ist dabei dem Randbereich des Flachmaterialstücks ein Formschlußelement zuzuordnen.

Um dieses Formschlußelement sicher mit dem Flachmaterial verbinden zu können, ist vorzugsweise vorgesehen, daß das dem Flachmaterial zugeordnete Formschlußelement in eine Randverstärkung des Flachmaterials integriert ist, so daß eine sichere und stabile Verbindung zwischen dem Flachmaterial und dem Formschlußelement besteht.

Im einfachsten Fall ist dabei vorgesehen, daß das Flachmaterial in seinem Randbereich als Durchbrüche ausgebildete Formschlußelemente aufweist.

Derartige Durchbrüche lassen sich besonders einfach herstellen, da kein zusätzliches Element an dem Randbereich des Flachmaterialstücks fixiert werden muß.

Ferner sind insbesondere bei Geweben oder Gewirken derartige Durchbrüche vorteilhaft, da diese sich so ausbilden lassen, daß sich diese bei Belastung nicht vergrößern.

Besonders vorteilhaft ist es dabei, wenn dabei das Gewebe oder Gewirke nicht weiterreißend ausgebildet ist oder die Durchbrüche gegen ein Weiterreißen zusätzlich stabilisiert sind.

Beim Vorsehen von als Durchbrüche ausgebildeten Formschlußelementen des Flachmaterialstücks ist es günstig, wenn die Durchbrüche von an mindestens einem der Rahmenteilelemente gehaltenen Formschlußelementen durchsetzt sind.

Derartige Formschlußelemente können beispielsweise Vorsprünge oder Nocken oder Zapfen sein, die an einem der Rahmenteilelemente angeordnet sind.

Es ist aber auch denkbar, derartige Formschlußelemente durch Materialanhäufungen zu bilden, die durch Einwirkung der Sonotrode, das heißt durch Aufheizen und Aufschmelzen von Kunststoffmaterial, entstehen.

Beispielsweise können derartige Formschlußelemente an einem Rahmenteilelement vorgesehene Zapfen oder Erhöhungen sein, die durch die Ultraschalleinwirkung und das daraus resultierende Aufweichen deformiert sind, das heißt beispielsweise pilzförmig ausgebildet sind, so daß sie den jeweils durchsetzenden Durchbruch dauerhaft festhalten und somit der Durchbruch nicht außer Eingriff mit dem Formschlußelement kommen kann.

Im Zusammenhang mit der bisherigen Erläuterung der einzelnen Ausführungsformen der erfindungsgemäßen Lösung wurde nicht näher darauf eingegangen, wie der Windschottrahmen selbst ausgebildet ist.

Im einfachsten Fall kann der Windschottrahmen ein einziges Rahmenteil aufweisen.

Es ist aber auch denkbar, daß der Windschottrahmen mehrteilig aufgebaut ist und das für die Herstellung des Verbindungsbereichs erforderliche Rahmenteilelement nur ein Teil des Rahmens ist.

Eine andere vorteilhafte Lösung sieht vor, daß der Windschottrahmen längs einer Trennfläche von gegenüberliegenden Seiten derselben aneinander anstoßende Rahmenteile aufweist und der Randbereich des Flachmaterialstücks zwischen diesen gehalten ist.

Eine derartige Lösung läßt eine besonders sichere und zuverlässige Fixierung des Randbereichs des Flachmaterialstücks am Rahmen zu.

Eine denkbare Lösung wäre dabei die, daß das Flachmaterial durch sich zwischen den zwei Rahmenteilen erstreckende Formschlußelemente gehalten ist.

Derartige Formschlußelemente könnten beispielsweise an eines der Rahmenteile angeformte Höcker oder Nocken sein.

Eine besonders günstige Lösung sieht dabei vor, daß die Formschlußelemente durch die Rahmenteile verbindende und durch Aufweichen und Erstarren des Kunststoffmaterials entstandene Verbindungsbereiche gebildet sind, das heißt, daß die Formschlußelemente einerseits durch Einwirken der Sonotrode geschaffene Verbindungsbereiche sind, die die beiden Rahmenteile miteinander verbinden, andererseits aber auch gleichzeitig Formschlußelemente darstellen, welche als solche den Randbereich des Flachmaterialstücks fixieren.

In diesem Fall ist es beispielsweise nicht zwingend notwendig, daß eine direkte Verbindung über aufgeweichtes oder aufgeschmolzenes Kunststoffmaterial zwischen dem Randbereich des Flachmaterialstücks und einem der Rahmenteile besteht. Es ist ausreichend, daß die Rahmenteile selbst miteinander fest verbunden sind und somit verhindern, daß der Randbereich des Flachmaterialstücks mit seinem Formschlußelement außer Eingriff mit dem Formschlußelement kommt, welches die beiden Rahmenteile miteinander verbindet.

Beispielsweise können bei der vorstehend beschriebenen Lösung die Durchbrüche bereits vorgearbeitet sein, das heißt die Durchbrüche liegen bereits in dem Randbereich des Flachmaterialstücks vor, wenn dieses auf das entsprechende Rahmenteil aufgelegt wird.

Alternativ dazu ist es aber auch denkbar, daß die Durchbrüche im Randbereich des Flachmaterialstücks beim Aufschmelzen des Kunststoffmaterials zur Bildung der Verbindungsbereiche durch Erhitzen des das Flachmaterialstück bildenden Materials entstanden sind, das heißt, daß die Durchbrüche erst auch dann entstehen, wenn die Verbindungsbereiche zwischen den beiden Rahmenteile geschaffen werden.

Eine weitere vorteilhafte Lösung sieht dabei vor, daß die Verbindungsbereiche zur dauerhaften Verbindung der Rahmenteile unmittelbar zwischen den Rahmenteilen und berührungsfrei relativ zum Randbereich des Flachmaterialstücks angeordnet sind, das heißt, daß die Verbindungsbereiche nur dazu dienen, die Rahmenteile relativ zueinander zu fixieren, andererseits aber die Fixierung, beispielsweise die formschlüssige Fixierung des Randbereichs des Flachmaterialstücks, unabhängig von den durch die Einwirkung der Sonotrode gebildeten Verbindungsbereichen erfolgt.

Im Zusammenhang mit der Erläuterung der bisherigen Ausführungsbeispiele wurde nicht darauf eingegangen, wie das Flachmaterialstück am Rahmen gehalten sein soll.

Beispielsweise wäre es denkbar, das Flachmaterialstück aus einem in sich formsteifen Material herzustellen, so daß eine Verbindung zwischen dem Flachmaterialstück und dem Rahmen ein erfindungsgemäßes Abschirmelement schafft.

In all den Fällen, in denen das Flachmaterialstück jedoch aus einem biegeschlaffen Material hergestellt ist, ist vorzugsweise vorgesehen, daß das Flachmaterialstück und der Rahmen mit Vorspannung relativ zueinander fixiert sind, das heißt, daß beim Abschirmelement selbst dann stets das Flachmaterialstück in dem Rahmen gespannt gehalten ist, um eine vorteilhafte optische Wirkung des Flachmaterialstücks zu erreichen. Eine andere Lösung alternativ hierzu sieht vor, daß das Flachmaterialstück durch einen an dem Rahmen gehaltenen Spannkörper gespannt ist, das heißt, daß an dem Rahmen ein zusätzlicher Spannkörper vorgesehen ist, welcher dafür sorgt, daß das Flachmaterialstück gespannt im Rahmen gehalten ist.

Eine vorteilhafte Realisierungsform hierzu sieht vor, daß der Spannkörper an einem an dem Rahmen fixierten Aufsatzteil angeordnet ist, das heißt, daß auf den Rahmen ein Teil aufsetzbar ist, welches den Spannkörper trägt und zwar so relativ zum Rahmen positioniert, daß dieser für eine Spannung des Flachmaterialstücks sorgt.

Eine andere alternative Lösung hierzu sieht vor, daß der Spannkörper an einem von zwei Rahmenteilen angeordnet ist, die miteinander verbunden sind, so daß durch Verbindung der Rahmenteile der Spannkörper auf das Flachmaterialstück zu wirken beginnt und somit das Flachmaterialstück so beaufschlagt, daß dieses in dem Rahmen gespannt gehalten ist.

Eine besonders günstige Spannung des Flachmaterialstücks läßt sich dann erreichen, wenn der Spannkörper elastisch ausgebildet ist.

Darüber hinaus betrifft die Erfindung ein Verfahren zum Herstellen eines Abschirmelements für Kraftfahrzeuge, insbesondere eines Windschotts oder Sonnenschutzes, umfassend einen Rahmen und ein vom Rahmen gehaltenes und sich über einen vom Rahmen umschlossenen Bereich erstreckendes Flachmaterialstück, wobei erfindungsgemäß das Flachmaterialstück am Rahmen dauerhaft dadurch fixiert wird, daß mindestens ein Rahmenteilelement aus Kunststoffmaterial durch einen mittels einer Sonotrode aufgeheizten, aufgeweichten und erstarrten Verbindungsbereich des Kunststoffmaterials mit einem weiteren Teil verbunden wird.

Die Vorteile dieses erfindungsgemäßen Verfahrens sind dieselben, wie im Zusammenhang mit dem erfindungsgemäßen Abschirmelement offenbart, insbesondere sind die Vorteile in der einfachen Herstellbarkeit eines derartigen Abschirmelements zu sehen.

Besonders günstig ist es dabei, wenn das mindestens eine Rahmenteilelement mit einem Randbereich des Flachmaterialstücks als weiterem Teil verbunden wird. Durch die derartige direkte Verbindung des Randbereichs des Flachmaterialstücks mit dem Rahmenteilelement besteht in besonders einfacher Weise die Möglichkeit, eine sichere Fixierung des Flachmaterialstücks am Rahmen zu erreichen.

Eine derartige Möglichkeit sieht dabei vor, daß das Flachmaterialstück in den durch die Sonotrode aufgeweichten und nachfolgend erstarrten Bereich eingebettet wird, so daß nicht die Notwendigkeit besteht, das Flachmaterialstück selbst aufzuschmelzen, sondern durch dieses Einbetten eine Art "formschlüssige Fixierung" erfolgen kann.

Eine andere Möglichkeit sieht vor, daß das Flachmaterialstück aus Kunststoffmaterial hergestellt wird, welches durch Ultraschall ebenfalls aufgeheizt sowie erweicht wird und dadurch mit dem Kunststoffmaterial des Rahmenteilelements durch Ineinanderfließen der aufgeweichten Kunststoffmaterialien eine Art "Schweißverbindung" erzeugt wird.

Bei dieser Variante der erfindungsgemäßen Lösung besteht somit die Möglichkeit, eine echte schweißähnliche Verbindung zwischen dem Flachmaterialstück und dem Kunststoffmaterial des Rahmenteilelements herzustellen.

Hinsichtlich der Art der Herstellung der Verbindung wäre es denkbar, eine durchgehende fortlaufende Verbindung längs einer Verbindungslinie zu schaffen. Als besonders günstig und prozeßtechnisch einfach beherrschbar hat es sich jedoch erwiesen, wenn der Randbereich des Flachmaterialstücks an dem Rahmenteilelement in längs einer Verbindungslinie aufeinanderfolgend mit Abstand angeordneten Verbindungsbereichen fixiert wird.

Alternativ zum Vorsehen der Lösung, bei welcher direkt eine Fixierung des Flachmaterialstücks am Rahmenteilelement erfolgt, ist es ebenfalls denkbar, daß das andere Teil ein weiteres Rahmenteilelement des Rahmens ist und daß die Rahmenteilelemente durch einen durch Aufheizen, Aufweichen und Erstarren des Kunststoffmaterials mittels der Sonotrode gebildeten Verbindungsbereich miteinander verbunden werden.

Dadurch besteht zwar keine direkte Verbindung zwischen dem mindestens einen Rahmenteilelement und dem Flachmaterialstück, diese Lösung schafft jedoch ebenfalls die Möglichkeit, das Flachmaterialstück sicher und dauerhaft durch die dauerhafte Verbindung der Rahmenteilelemente zu fixieren.

Ein weiteres Ausführungsbeispiel einer vorteilhaften erfindungsgemäßen Lösung sieht vor, daß der Rahmen aus längs einer Trennfläche von gegenüberliegenden Seiten derselben aneinander anstoßenden Rahmenteilen gebildet wird, zwischen denen der Randbereich des Flachmaterialstücks angeordnet wird.

Diese Lösung hat den großen Vorteil, daß das Flachmaterialstück sicher zwischen den beiden Rahmenteilen gehalten werden kann, wobei einerseits die Möglichkeit besteht, lediglich die Rahmenteile durch einen durch Aufschmelzen des Kunststoffmaterials erhältlichen Verbindungsbereich miteinander zu verbinden, andererseits aber auch die Möglichkeit besteht, das Flachmaterialstück mit mindestens einem der Rahmenteile ebenfalls über einen Verbindungsbereich aus aufgeschmolzenem Kunststoffmaterial zu verbinden.

Hinsichtlich der Fixierung des Flachmaterialstücks am Rahmen wurden bislang keine näheren Angaben gemacht. So sieht eine vorteilhafte Lösung vor, daß das Flachmaterialstück und der Rahmen mit Vorspannung relativ zueinander fixiert werden. Eine derartige Fixierung der beiden relativ zueinander mit Vorspannung ist in unterschiedlichster Art und Weise realisierbar.

Beispielsweise ist es denkbar, das Flachmaterialstück vor Fixierung desselben am Rahmen vorzuspannen und in dieser vorgespannten Stellung am Rahmen zu fixieren.

Eine andere vorteilhafte Lösung sieht vor, den Rahmen kraftbeaufschlagt zu deformieren, und dann mit dem Flachmaterialstück zu verbinden, so daß der Rahmen nach Lösen der Kraftbeaufschlagung aufgrund seiner federelastischen Eigenschaften die Tendenz hat, in die ursprüngliche Form sich zurückzubewegen und dadurch das Flachmaterialstück spannt.

Eine andere vorteilhafte Lösung sieht vor, daß das Flachmaterialstück durch Vorsehen eines Spannkörpers an dem Rahmen gespannt wird.

Eine derartige Lösung sieht daher zuerst eine Fixierung des Flachmaterials mit wenig oder geringer Spannung am Rahmen vor und durch das zusätzliche Anbringen des Spannkörpers wird dann die Möglichkeit geschaffen, das Flachmaterialstück in dem vom Rahmen umgrenzten Bereich gespannt zu halten.

Bei den bislang beschriebenen Ausführungsbeispielen wurde nicht näher darauf eingegangen, wie überschüssiges Flachmaterial, das über den Rahmen übersteht, nach Fixierung des Flachmaterialstücks an dem Rahmen entfernt wird. Eine Möglichkeit besteht darin, dieses Flachmaterials durch Beschneiden zu entfernen.

Eine andere Möglichkeit wäre die, bereits passende Zuschnitte für das Flachmaterialstück vor dessen Fixierung am Rahmen zu erstellen, so daß Flachmaterial über den Rahmen nicht übersteht.

Eine weitere vorteilhafte Lösung sieht vor, das über den Rahmen überstehendes Flachmaterial bei Einwirken der Sonotrode auf das Rahmenteilelement mittels einer Schneidkante abgetrennt wird.

Diese Lösung sieht damit vor, daß durch die Einwirkung der Sonotrode nicht nur ein Verbindungsbereich durch Aufschmelzen des Kunststoffmaterials erzeugt wird, sondern gleichzeitig durch Zusammenwirken des Ultraschalls mit der vorgesehenen Schneidkante ein Abtrennen von überflüssigem Flachmaterial möglich ist.

In diesem Fall ist die Schneidkante dann vorzugsweise auf einem Rahmenteilelement vorzusehen und außerdem ist vorzugsweise die Schneidkante als umlaufende durchgehende Schneidkante auszubilden, so daß beispielsweise längs der gesamten Außenkontur des Rahmens dann ein Abtrennen des überschüssigen Flachmaterials erfolgt.

Das Flachmaterial ist vorzugsweise so ausgebildet, daß es einer in dem Kraftfahrzeug sitzenden Person erlaubt, durch dieses hindurchzublicken.

Insbesondere im Fall eines Windschotts ist das Flachmaterial so ausgebildet, daß es dem Fahrer erlaubt, über den Rückspiegel durch das Flachmaterial hindurch nach hinten zu schauen.

Ferner ist vorzugsweise im Fall eines Windschotts vorgesehen, daß das Flachmaterial partiell luftdurchlässig ist, das heißt, daß das Flachmaterial keine geschlossene und im wesentlichen luftundurchlässige Fläche darstellt.

Diese Forderung macht es erforderlich, das Flachmaterial entweder als Folie mit Durchbrüchen oder als Geflecht, Gewebe oder Gewirke herzustellen, welches aufgrund der Zwischenräume luftdurchlässig ist und auch einen Durchblick durch dieses zuläßt. Ferner sind vorzugsweise die Fasern oder Drähte des Flachmaterialstücks so fein gewebt, daß sich die Durchsicht nicht nennenswert behindern.

Hinsichtlich des Materials für ein Geflecht, Gewebe oder Gewirke sind die unterschiedlichsten Lösungen denkbar. Im einfachsten Fall ist vorgesehen, daß dieses Fasern, vorzugsweise Kunststofffasern sind.

Es ist aber auch denkbar, das Geflecht, Gewebe oder Gewirke aus in sich steifen Fasern oder auch, wie beispielsweise Kohlenstofffasern oder Drähten, insbesondere Metalldrähten herzustellen.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Ansicht eines ersten Aus- führungsbeispiels eines erfindungsgemäßen Abschirmelements, vorzugsweise als Windschott einsetzbar;
- Fig. 2: eine ausschnittsweise vergrößerte Darstellung eines Bereichs A in Fig. 1 vor Auflegen eines Randbereichs eines Flachmaterialstücks;
- Fig. 3: eine schematische Darstellung eines auf den Bereich gemäß Fig. 2 aufgelegten Randbereichs eines Flachmaterialstücks vor Einwirkung der Sonotrode;
- Fig. 4: eine schematische Darstellung der Einwirkung der Sonotrode auf den Randbereich des Flach- materialstücks;
- Fig. 5: eine ausschnittsweise vergrößerte Mikroskop- aufnahme eines Verbindungsbereichs mit einge- betteten Fasern eines Flachmaterialstücks;
- Fig. 6: einen Schnitt längs Linie 6-6 in Fig. 2 vor Auflegen des Randbereichs des Flachmaterial- stücks und vor Einwirkung der Sonotrode;
- Fig. 7: eine Darstellung des Schnitts gemäß Fig. 6 nach Einwirken der Sonotrode und Ausbilden des Verbindungsbereichs;
- Fig. 8: eine schematische Darstellung einer Möglich- keit eines Verfahrens zum Aufbringen des Flachmaterialstücks im vorgespannten Zustand auf einem Rahmen mit
- Fig. 8a: dem Vorspannen des Flachmaterials an einem Spannrahmen;
- Fig. 8b: dem Spannen des Flachmaterials über den Rahmen;
- Fig. 8c: dem Einwirken der Sonotroden zur Fixierung des vorgespannten Flachmaterialstücks an dem Rahmen und
- Fig. 8d: dem fertigen Abschirmelement;
- Fig. 9: eine schematische ausschnittsweise Darstellung der miteinander für das zweite Ausführungs- beispiel des erfindungsgemäßen Abschirm- elements zu verbindenden Teile;
- Fig. 10: eine Darstellung ähnlich Fig. 9 mit Einwirkung der Sonotrode;
- Fig. 11: eine schematische Darstellung des fertigen Abschirmelements mit zwischen Rahmenteilen fixiertem Flachmaterialstück;
- Fig. 12: eine ausschnittsweise Darstellung der Fixierung des Flachmaterialstücks bei gleich- zeitiger Verbindung der Rahmenteile beim zweiten Ausführungsbeispiel;
- Fig. 13: eine schematische Darstellung einer Her- stellung des zweiten Ausführungsbeispiels des erfindungsgemäßen Abschirmelements mit
- Fig. 13a: einer schematischen Darstellung der Positionierung des Flachmaterials;
- Fig. 13b: einem Spannen des Flachmaterials nach Positionierung;
- Fig. 13c: einem Anlegen der Rahmenteile bei gespanntem Flachmaterial;
- Fig. 13d: einem Positionieren der Rahmenteile zuein- ander bei gespanntem Flachmaterial;
- Fig. 13e: dem Fixieren der Rahmenteile aneinander mittels Sonotroden und
- Fig. 13f: dem fertiggestellten Abschirmelement gemäß dem zweiten Ausführungsbeispiel;
- Fig. 14: eine schematische Darstellung einer Fixierung des Randbereichs des Flachmaterialstücks bei einem dritten Ausführungsbeispiel;
- Fig. 15: eine schematische Darstellung der Fixierung des Randbereichs des Flachmaterialstücks bei einem vierten Ausführungsbeispiel;
- Fig. 16: einen schematischen Querschnitt durch zwei Rahmenteile eines fünften Ausführungs- beispiels;
- Fig. 17: eine schematische Darstellung der Fixierung der beiden in Fig. 16 dargestellten Rahmen- teile des fünften Ausführungsbeispiels;
- Fig. 18: ein Querschnitt durch zwei Rahmenteile eines sechsten Ausführungsbeispiels ähnlich Fig. 16;
- Fig. 19: einen Querschnitt durch die miteinander ver- bundenen Rahmenteile des sechsten Ausführungs- beispiels ähnlich Fig. 17;
- Fig. 20: eine Draufsicht ähnlich Fig. 2 auf ein siebtes Ausführungsbeispiel;
- Fig. 21: eine perspektivische Darstellung eines Aus- schnitts des Rahmens und eines Ausschnitts des Flachmaterialstücks beim siebten Ausführungs- beispiel vor dem Verbinden der beiden mitein- ander;
- Fig. 22: eine Darstellung ähnlich Fig. 21 einer ersten Variante des siebten Ausführungsbeispiels;
- Fig. 23: eine Darstellung ähnlich Fig. 21 einer zweiten Variante des siebten Ausführungsbeispiels;
- Fig. 24: eine Darstellung ähnlich Fig. 21 einer dritten Variante des siebten Ausführungsbeispiels;
- Fig. 25: eine Darstellung eines achten Ausführungs- beispiels bei auf einen ein Rahmenteilelement aufgelegtem Flachmaterial vor einem Herstellen des Verbindungsbereichs;
- Fig. 26: einen Schnitt ähnlich Fig. 6 durch das Rahmen- teilelement des achten Ausführungsbeispiels;
- Fig. 27: eine schematische Darstellung eines neunten Ausführungsbeispiels bei bereits mit dem Rahmen verbundenem Randbereich des Flach- materialstücks und vor Aufsetzen eines Auf- setzteils;
- Fig. 28: eine schematische Darstellung des Fixierens des Aufsetzteils mittels einer Sonotrode beim neunten Ausführungsbeispiel;
- Fig. 29: einen Schnitt ähnlich Fig. 27 durch das neunte Ausführungsbeispiel mit aufgesetztem Aufsatz- teil;
- Fig. 30: einen Schnitt durch ein zehntes Ausführungs- beispiel eines erfindungsgemäßen Abschirm- elements vor Zusammensetzen der beiden Rahmen- teile;
- Fig. 31: einen Schnitt ähnlich Fig. 30 durch die mit- einander verbundenen Rahmenteile des zehnten Ausführungsbeispiels;
- Fig. 32: einen Schnitt ähnlich Fig. 30 durch ein elftes Ausführungsbeispiel;
- Fig. 33: einen Schnitt ähnlich Fig. 31 durch das elfte Ausführungsbeispiel;
- Fig. 34: eine perspektivische Ansicht eines Abschirm- elements eines zwölften Ausführungsbeispiels.

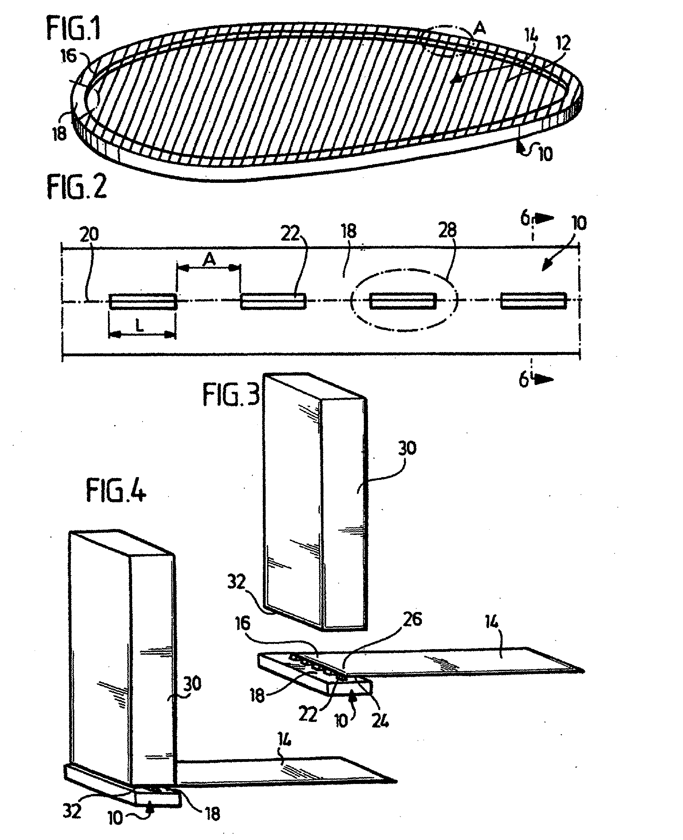

Ein Ausführungsbeispiel eines erfindungsgemäßen Abschirmelements für Kraftfahrzeuge, beispielsweise eines Windschotts, dargestellt in Fig. 1, umfaßt einen als Ganzes mit 10 bezeichneten Rahmen, der einen Flächenbereich 12 umschließt.

Zum Abdecken des Flächenbereichs 12 ist mit dem Rahmen 10 ein Flachmaterialstück 14 verbunden, welches den vom Rahmen 10 umschlossenen Bereich übergreift.

Das Flachmaterialstück ist vorzugsweise aus einer Durchsicht erlaubenden Folie oder aus einem Durchsicht erlaubenden Gewebe oder Gewirke hergestellt, wobei bei dem Gewebe oder Gewirke vorzugsweise dünne Fäden eingesetzt werden.

Bei dem ersten Ausführungsbeispiel ist, wie in Fig. 1 und 2 dargestellt, das Flachmaterialstück 14 mit einem äußeren Randbereich 16 auf einer Seite, beispielsweise einer Oberseite 18, des Rahmens 10 fixiert.

Zur Fixierung des Flachmaterialstücks 14 ist bei dem aus thermoplastischem Kunststoff hergestellten Rahmen 10 die Oberseite 18 mit längs einer Verbindungslinie 20 angeordneten Energierichtungsgebern 22 versehen, welche sich über die Oberseite 18 erheben und sich längs der Verbindungslinie 20 über eine Länge L erstrecken, wobei zwischen den einzelnen Energierichtungsgebern 22 jeweils ein Abstand A verbleibt (Fig. 2).

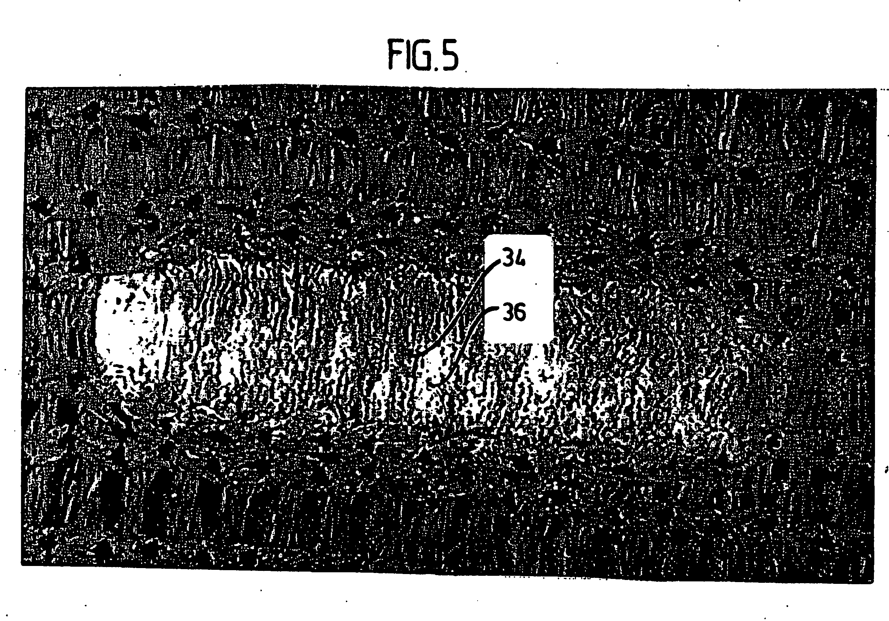

Wird nun auf die Oberseite 18 mit den Energierichtungsgebern 22 das Flachmaterialstück 14 mit seinem Randbereich 16 so aufgelegt, daß eine dem Rahmen 10 zugewandte erste Seite 24 des Randbereichs 16 auf den Energierichtungsgebern 22 aufliegt (Fig. 3) und eine der ersten Seite 24 gegenüberliegende zweite Seite 26 mit einer Frontfläche 32 einer als Ganzes mit 30 bezeichneten Sonotrode beaufschlagt (Fig. 4), so erfolgt bei arbeitender Sonotrode in einem den Energierichtungsgeber 22 umfassenden Rahmenteilelement 28 des Rahmens 10 ein Aufheizen und Aufweichen des Kunststoffmaterials, so daß im Bereich der Energierichtungsgeber 22 eine Kunststoffschmelze des thermoplastischen Kunststoffs der Rahmenteilelemente 28 entsteht, welche den Randbereich 16 des beispielsweise als Gewirke ausgebildeten Flachmaterialstücks 14 durchtränken und somit zu einem Einbetten von Fasern 34 des Gewirkes in einen erschmolzenen Verbindungsbereich 36 führen, welcher nach seinem Erstarren die Fasern 34 des Gewirkes sicher am Rahmen 10 fixiert (Fig. 5).

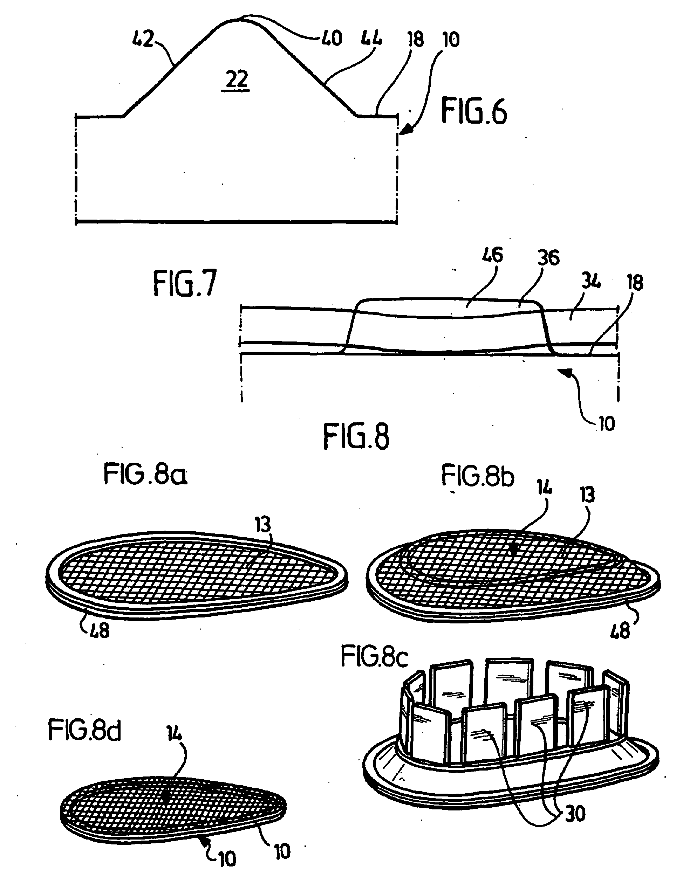

Um durch die Sonotrode 30 ein effizientes Aufheizen, Aufweichen und Aufschmelzen des Kunststoffs im Energierichtungsgeber 22 zu erreichen, ist vorzugsweise vorgesehen, daß der Energierichtungsgeber 22 im Querschnitt, wie in Fig. 6 dargestellt, an seiner Spitze eine Rundung 40 trägt und ausgehend von dieser Rundung zwei dachförmig verlaufende Schrägflächen 42 und 44 aufweist, die zur Oberseite 18 des Rahmens 10 hin verlaufen.

Durch die Rundung 40 an der Spitze des Energierichtungsgebers 22 wird eine Zerstörung der Fasern 34 beim Aufheizen des Kunststoffs durch Ultraschall vermieden, so daß die Fasern 34 im wesentlichen unbeschädigt in eine aus dem Energierichtungsgeber 22 gebildete Materialanhäufung 46 des Kunststoffs eingebettet werden, die die Fasern 34 im Verbindungsbereich 36 umgibt, wie in Fig. 7 dargestellt und somit eine Art Formschlußverbindung zwischen dem Rahmen 10 und den Fasern 34 des Gewirkes schafft.

Um das Flachmaterialstück 14 an dem Rahmen 10 in einem gespannten Zustand fixieren zu können, wird, wie in Fig. 8 dargestellt, ein Flachmaterial 13 in einen Spannrahmen 48 eingelegt und in dem Spannrahmen 48 fixiert.

Wird beispielsweise dann der Rahmen 10 von unten gegen das Flachmaterial 13 gedrückt und angehoben, so wird das Flachmaterial 13, welches im Spannrahmen 48 fixiert ist, gespannt und somit auch das den Flächenbereich 12 übergreifende Flachmaterialstück 14.

Im so vorgespannten Zustand des Flachmaterialstücks 14 erfolgt nun mit einer Vielzahl von Sonotroden die Erzeugung der Kunststoffschmelze im Bereich der einzelnen Energierichtungsgeber 22, so daß das vorgespannte Flachmaterialstück 14 fest am Rahmen 10 fixiert wird.

Durch Abnehmen der Sonotroden und Beschneiden des Flachmaterials 13 in dem über den Spannrahmen 10 hinausragenden Bereich läßt sich dann das erfindungsgemäße Abschirmelement mit am Rahmen 10 gespannt gehaltenem Flachmaterialstück 14 herstellen.

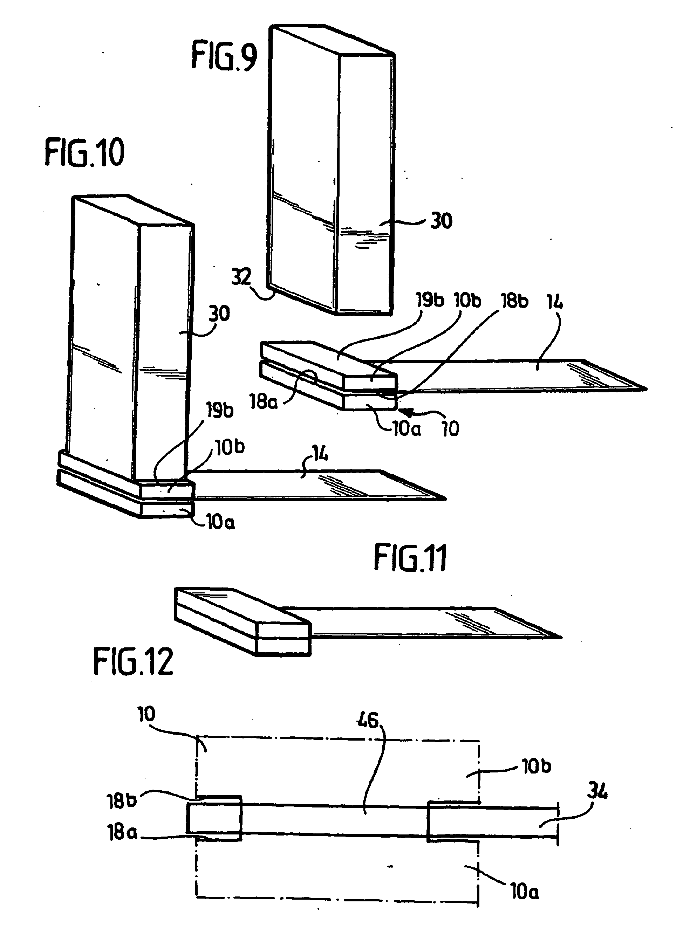

Bei einem zweiten Ausführungsbeispiel eines erfindungsgemäßen Windschottrahmens, dargestellt in den Fig. 9 bis 10, ist der Rahmen 10 aus zwei Rahmenteilen 10a und 10b gebildet, wobei eines der Rahmenteile, beispielsweise das Rahmenteil 10a die Energierichtungsgeber 22 aufweist, die Oberseite 18a des Rahmenteils 10a nach oben überstehen.

Auf die Oberseite 18a mit den Energierichtungsgebern 22 des Rahmenteils 10a wird nun der Randbereich 16 des Flachmaterialstücks 14 aufgelegt in gleicher Weise wie im Zusammenhang mit dem ersten Ausführungsbeispiel beschrieben und außerdem wird noch auf die zweite Seite 26 des Randbereichs 16 das Rahmenteil 10b so aufgelegt, daß dessen Seite 18b der Seite 18a zugewandt ist und auf der zweiten Seite 26 des Randbereichs 16 aufliegt.

Durch Beaufschlagen des Rahmenteils 10b auf seiner der Seite 18b abgewandten Seite 19b mit der Frontseite 32 der Sonotrode 30 wird, wie in Fig. 10 dargestellt, wiederum das Kunststoffmaterial im Bereich der Energierichtungsgeber 22 aufgeheizt, aufgeschmolzen, so daß im Bereich derselben wiederum eine Kunststoffschmelze entsteht, die beispielsweise das Gewirke des Flachmaterialstücks 14 durchtränkt, so daß ebenfalls eine Materialanhäufung 46, wie in Fig. 7 des ersten Ausführungsbeispiels dargestellt, entsteht, und gleichzeitig ein geringfügiges Aufweichen und Erschmelzen des Kunststoffmaterials des Rahmenteils 10b im Bereich der Materialanhäufungen 46 entsteht, so daß insgesamt, wie in Fig. 11 und Fig. 12 dargestellt, die Fasern 34 in eine zunächst aufgeschmolzene und dann wieder erstarrte Materialanhäufung 46 eingebettet sind, die gleichzeitig aber auch sich von der Seite 18a des Rahmenteils 10a bis zur Seite 18b des Rahmenteils 10b erstreckt und somit zusätzlich zur Einbettung der Fasern 34 gleichzeitig die Rahmenteile 10a und 10b miteinander verbindet (Fig. 12).

Das Spannen des Flachmaterialstücks 14 kann auch beim zweiten Ausführungsbeispiel in gleicher Weise wie beim ersten Ausführungsbeispiel erfolgen, wobei in diesem Fall das erste Rahmenteil 10a von unten gegen das Flachmaterial 13 gelegt wird, während das zweite Rahmenteil 10b von oben auf das gespannte Flachmaterialstück aufgelegt wird.

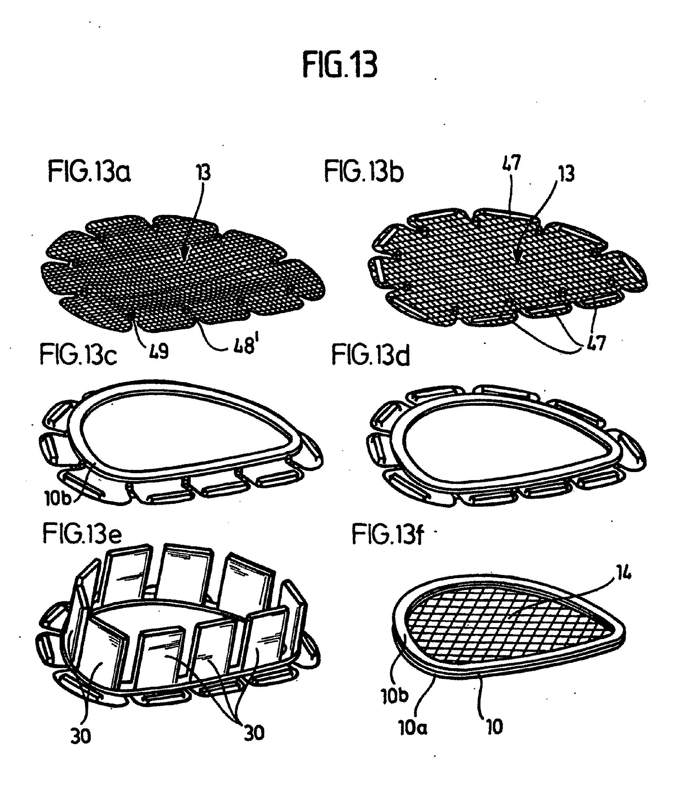

Es besteht aber auch beim zweiten Ausführungsbeispiel alternativ dazu die Möglichkeit, entsprechend Fig. 13 das Flachmaterialstück in einen Spannrahmen 48' einzulegen, welcher primär durch Vorsprünge 49 auch für eine Positionierung des Flachmaterials 13 sorgt und welcher in der Lage ist, mit einer Vielzahl von Zugelementen 47 das Flachmaterial 13 zu spannen (Fig. 13b).

Ist das Flachmaterial 13 gespannt, erfolgt ein Auflegen der Rahmenteile 10a und 10b ein Positionieren derselben relativ zueinander (Fig. 13c und Fig. 13d), beispielsweise über einen Formschluß, und anschließend, wie in Fig. 13e dargestellt, ein Durchführen der Ultraschallbeaufschlagung mittels einer Vielzahl von Sonotroden 30 zur Erzeugung der Kunststoffschmelze im Bereich der Energierichtungsgeber 22.

Nach Abschneiden der überschüssigen Teile des Flachmaterials 13 liegt dann, wie in Fig. 13f dargestellt, das Abschirmelement mit im Rahmen 10 gespanntem Flachmaterialstück 14 vor.

Die bisherige Erläuterung des ersten und zweiten Ausführungsbeispiels geht davon aus, daß das Flachmaterialstück 14 beispielsweise aus einem Gewirke besteht, dessen Fasern insoweit temperaturbeständig sind, daß sie ihre Struktur in der bei Anlegen der Sonotrode 30 und Durchführung des Ultraschallschweißens auftretenden Temperatur im wesentlichen nicht verändern.

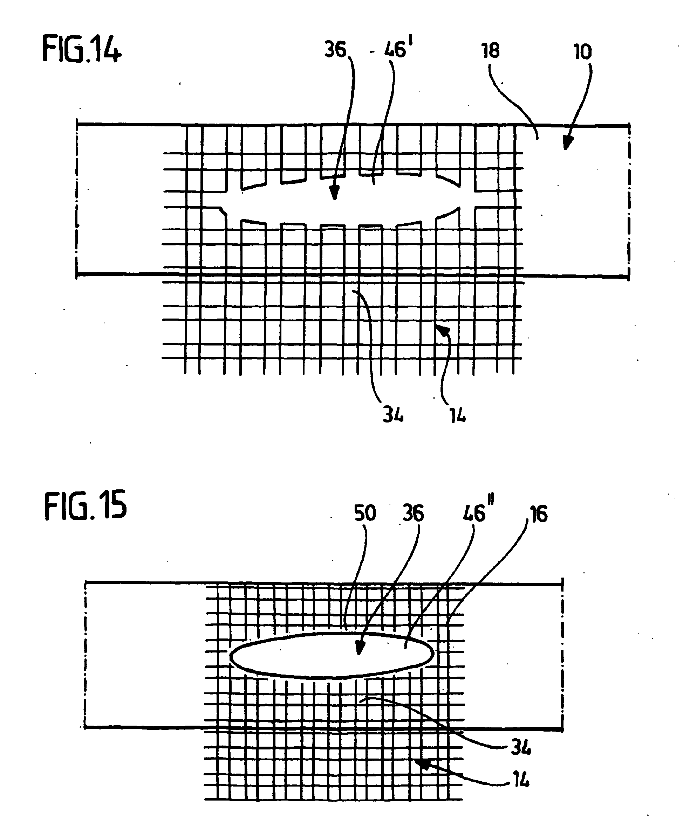

Ist allerdings das Flachmaterialstück 14 beispielsweise aus einem Gewirke hergestellt, dessen Fasern bei der Entstehung der Kunststoffschmelze im Bereich der Energierichtungsgeber 22 ebenfalls aufschmelzen, so entsteht, wie beispielsweise bei einem dritten Ausführungsbeispiel in Fig. 14 schematisch dargestellt, in dem Verbindungsbereich 36 eine Kunststoffschmelze aus einer Mischung des Kunststoffs des Energierichtungsgebers 22 und des Kunststoffs der Fasern 34, und insgesamt eine Materialanhäufung 46' mit einer derartigen gemischten und später erstarrten Schmelze entsteht, in welcher die Fasern 34 dann ebenfalls gehalten sind.

Eine derartige Materialanhäufung 46' kann dabei sowohl bei einer Fixierung des Flachmaterialstücks 14 gemäß dem ersten Ausführungsbeispiel als auch dem zweiten Ausführungsbeispiel auftreten.

Ein viertes Ausführungsbeispiel, schematisch dargestellt in Fig. 15, stellt eine Sonderform des zweiten Ausführungsbeispiels dar. Bei diesem vierten Ausführungsbeispiel findet, wie in Fig. 15 dargestellt, beim Ultraschallerhitzen im Bereich des Energierichtungsgebers 22 ebenfalls die Ausbildung einer Kunststoffschmelze statt, die allerdings dazu führt, daß die Fasern 34 des Gewirkes des Flachmaterialstücks 14 zumindest teilweise, wenn nicht vollständig zerstört werden, so daß in dem Randbereich 16 des Flachmaterialstücks 14 ein die entstehende Materialanhäufung 46" umschließender Durchbruch 50 entsteht, jedoch keine Verbindung mehr zwischen den Fasern 14 und der erschmolzenen und wieder erstarrten Materialanhäufung 46".

Die Materialanhäufung 46" dient dabei lediglich dazu, das Rahmenteil 10a und das Rahmenteil 10b miteinander zu verbinden, zwischen denen dann der Randbereich 16 liegt und an denen der Randbereich 16 "formschlußähnlich" dadurch gehalten ist, daß die Materialanhäufung 46" den sich bildenden Durchbruch 50 in der Art einer Brücke zwischen den Rahmenteilen 10a und 10b durchsetzt und somit die Materialanhäufung 46" den Randbereich 16 dadurch, daß diese den Durchbruch 50 durchsetzt, vollständig fixiert, wobei sich die Größe des Durchbruchs 50 entsprechend der Bildung der Größe der Materialanhäufung 46" selbst bildet und somit die Materialanhäufung 46" im wesentlichen an dieser anliegend umschließt. Vorzugsweise ist bei diesem Ausführungsbeispiel das Material des Gewirkes so, daß es nicht weiterreißt, wenn eine Faser 34 zerstört wird, so daß sich die Durchbrüche 50 im Laufe der Zeit nicht vergrößern.

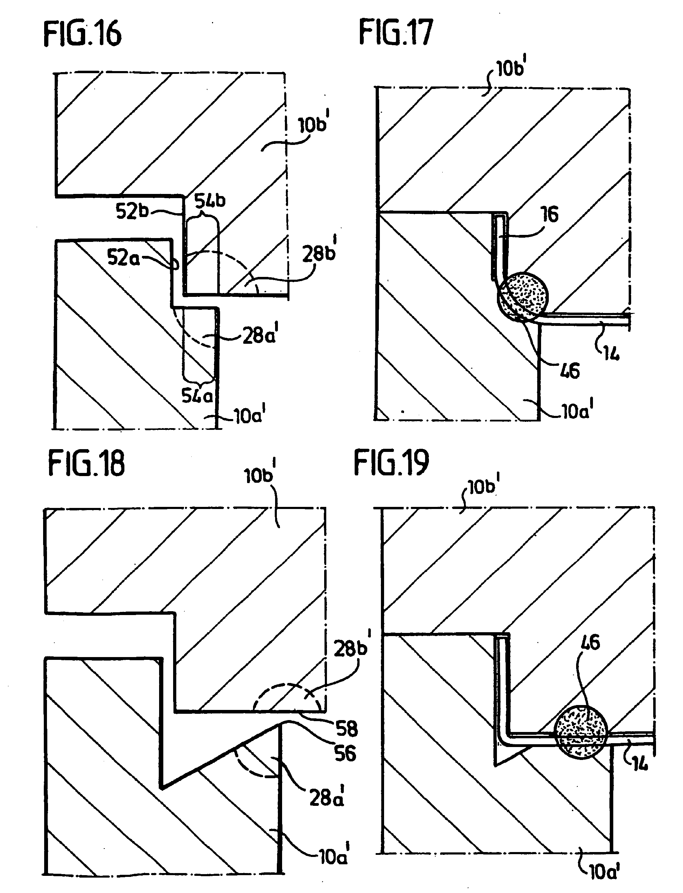

Bei einem fünften Ausführungsbeispiel, dargestellt in den Fig. 16 und 17 besteht alternativ zu dem Vorsehen der Energierichtungsgeber 22 auch die Möglichkeit, die Rahmenteile 10a' und 10b' mit miteinander korrespondieren, jedoch ungleich hohen Stufen 52a und 52b auszubilden, so daß beim Zusammendrücken der Rahmenteile 10a und 10b die beiden Rahmenteile 10a und 10b in einem schmalen Bereich 54a und 54b zur Anlage kommen, welcher von der Funktion her gesehen dem Energierichtungsgeber 22 entspricht, so daß in dem jeweils entsprechenden Rahmenteilelement 28a' und 28b' die Ausbildung der Kunststoffschmelze und somit die Ausbildung einer Schweißverbindung zwischen den Rahmenteilen 10a und 10b erfolgt, wobei in diesem Fall auch ein Miteinschweißen des zwischen diese eingelegte Flachmaterialstücks 14 mit dem Randbereich 16 möglich ist, wie in Fig. 17 dargestellt.

Bei einem sechsten Ausführungsbeispiel, dargestellt in Fig. 18 und Fig. 19 wird vom Grundsatz her dasselbe Prinzip wie beim fünften Ausführungsbeispiel angewandt, allerdings mit dem Unterschied, daß das Rahmenteilelement 28a' ein Spitze 56 bildet, während das Rahmenteilelement 28b' eine auf der Spitze auflegbare Flachseite 58 bildet, wobei beim dann erfolgenden Ultraschallschweißen ebenfalls wiederum die Ausbildung einer Kunststoffschmelze und der Materialanhäufung 46 erfolgt, welche den Randbereich 16 des Flachmaterialstücks 14 durchtränkt und außerdem die Rahmenteile 10a' und 10b' verbindet, wie in Fig. 19 dargestellt.

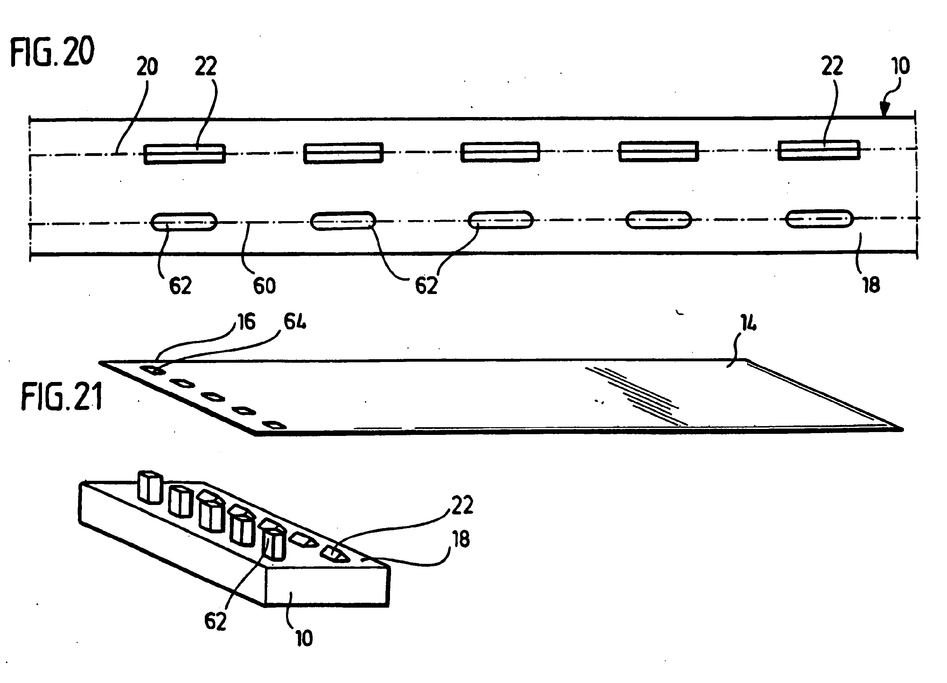

Bei einem siebten Ausführungsbeispiel, dargestellt in Fig. 20 und 21, sind diejenigen Elemente, die mit denen des ersten Ausführungsbeispiels identisch sind, mit denselben Bezugszeichen versehen, so daß hinsichtlich der Beschreibung derselben im Einzelnen auf die Ausführungen zum ersten Ausführungsbeispiel Bezug genommen werden kann.

In gleicher Weise wie beim ersten Ausführungsbeispiel sind längs der Verbindungslinie 20 die einzelnen Energierichtungsgeber 22 angeordnet.

Längs einer zur Verbindungslinie 20 parallelen Linie 60 sind im Abstand voneinander zusätzliche Formschlußkörper 62 vorgesehen, die ebenfalls über die Oberseite 18 des Rahmens 10 überstehen.

Zur Fixierung des Flachmaterialstücks 14 ist der Randbereich 16 desselben mit Durchbrüchen 64 versehen, welche beim Auflegen des Randbereichs 16 so liegen, daß die Vorsprünge 62 die Durchbrüche 64 durchsetzen und somit bereits eine formschlüssige Verbindung zwischen dem Rahmen 10 und dem Flachmaterialstück 14 herstellen, die beispielsweise ein Spannen des Flachmaterialstücks 14 vor der Ultraschallbeaufschlagung erlaubt. Ferner stellt eine derartige Formschlußverbindung mit den Formschlußelementen 62 und 64 eine zusätzliche Sicherung des Flachmaterialstücks am Rahmen 10 dar.

Die endgültige dauerhafte Verbindung mit dem Rahmen 10 erfolgt dabei nach wie vor über Aufheizen und Aufschmelzen der Energierichtungsgeber 22 unter Bildung der Verbindungsbereiche 26, wie im Zusammenhang mit dem ersten Ausführungsbeispiel im Einzelnen beschrieben.

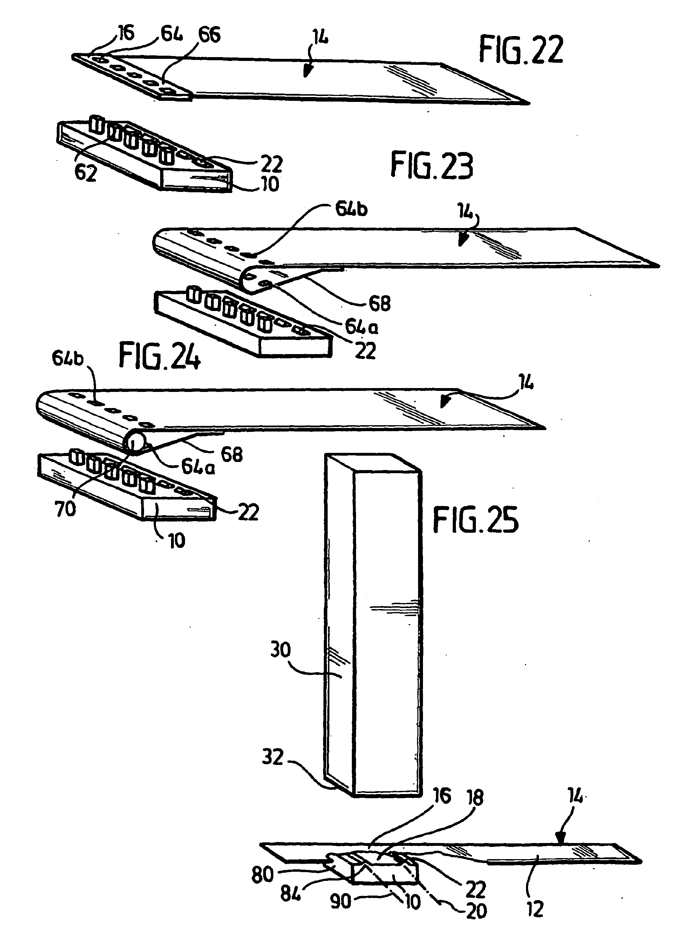

Bei einer ersten Variante des siebten Ausführungsbeispiels, dargestellt in Fig. 22, ist in Abwandlung des siebten Ausführungsbeispiels der Randbereich 16 noch mit einer zusätzlichen Verstärkung 66 versehen, wobei die Durchbrüche 64 dann sowohl die Verstärkung 66 als auch den Randbereich des Flachmaterialstücks 14 durchsetzen.

Bei einer weiteren Variante, dargestellt in Fig. 23, erfolgt die Ausbildung der Verstärkung 66 durch eine umgelegte Schlaufe 68, wobei in beiden Schlaufenlagen einander deckungsgleich gegenüberliegende Durchbrüche 64a und 64b vorgesehen sind.

Bei einer dritten Variante des siebten Ausführungsbeispiels, dargestellt in Fig. 24 wird die Schlaufe 68 zusätzlich noch mit einem in diese eingelegten Keder 70 versehen, welcher eine noch bessere reißfeste Fixierung der Schlaufe 68 über die Durchbrüche 64a und 64b mit den Formschlußelementen 62 erlaubt.

Im übrigen erfolgt ein Verbindung des Flachmaterialstücks 14 in dem Randbereich 16 mit dem Rahmen 10 über das Aufschmelzen der Energierichtungsgeber 22 und Einbetten der Fasern, wie dies bereits im Zusammenhang mit dem ersten Ausführungsbeispiel ausführlich erläutert wurde.

Bei dem siebten Ausführungsbeispiel und allen hierzu beschriebenen Varianten besteht in gleicher Weise wie beim zweiten Ausführungsbeispiel auch die Möglichkeit, zwei Rahmenteile 10a und 10b zu verwenden, wobei eines der Rahmenteile, beispielsweise das Rahmenteil 10a die Energierichtungsgeber 22 und die Formschlußelemente 62 trägt und nach Auflegen des Randbereichs 16 des Flachmaterialstücks 14 das Rahmenteil 10b aufgelegt und mit einer auf dieses einwirkenden Sonotrode ein Aufheizen und Aufschmelzen des Kunststoffmaterials im Bereich der Energierichtungsgeber 22 und der Formschlußkörper 62 erfolgt, so daß eine Verbindung zwischen den Rahmenteilen 10a und 10b unter gleichzeitiger Einbettung der Fasern 34 des Flachmaterialstücks 14 erfolgt.

Es besteht aber auch die Möglichkeit, ein Flachmaterialstück aus aufschmelzenden Fasern einzusetzen, so daß eine Verbindung ähnlich dem dritten Ausführungsbeispiel, dargestellt in Fig. 14 erfolgt.

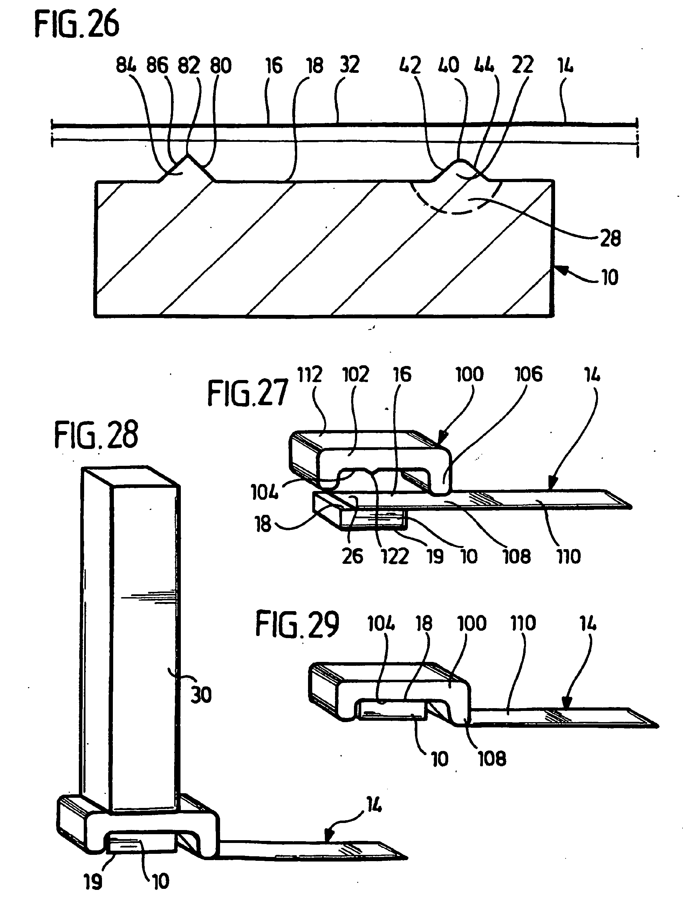

Bei einem achten Ausführungsbeispiel, dargestellt in Fig. 25 und 26 sind an dem Rahmen 10 auf dessen Oberseite 18 nicht nur die längs der Verbindungslinie 20 angeordneten Energierichtungsgeber 22 angeordnet, sondern es ist, vorzugsweise auf einer dem vom Rahmen 10 umschlossenen Flächenbereich 12 abgewandten Seite, vorzugsweise nahe eines Außenrandes 80 des Rahmens eine durchlaufende Schneidkante 82 vorgesehen, welche an der Spitze eines Wulstes 84 mit dachförmig zueinander verlaufenden Schrägflächen 86 und 88 angeordnet ist, wobei der Wulst 84 vorzugsweise dieselbe Höhe über der Oberseite 18 aufweist als die längs der Verbindungslinie 20 angeordneten Energierichtungsgeber 22.

Dadurch, daß eine möglichst scharf ausgebildete Schneidkante 82 vorgesehen ist, erfolgt eine erhebliche mechanische Belastung der Fasern 34 im Bereich der Schneidkante 82 beim Einwirken der Sonotrode 30 mit der Flachseite 32 auf den Randbereich 16 des Flachmaterials, so daß dieses längs der entlang einer Schneidlinie 90 verlaufenden Schneidkante 82 abgeschnitten wird, wobei die Schneidlinie 90 beispielsweise in konstantem Abstand zum Außenrand 80 des Rahmens 10 verläuft.

Ferner wird in gleicher Weise wie im Zusammenhang mit dem ersten Ausführungsbeispiel beschrieben, der Randbereich 16 des Flachmaterialstücks 14 im Bereich des Energierichtungsgebers 22 unter Ausbildung der Materialanhäufung 46 eingebettet und am Rahmen 10 fixiert.

Damit entfällt bei diesem Ausführungsbeispiel ein Beschneiden des Flachmaterialstücks 14 entweder vor dem Verbinden mit dem Rahmen 10 oder danach, da in einem Vorgang durch das Ultraschallschweißen einerseits eine Verbindung zwischen dem Randbereich 16 des Flachmaterialstücks 14 und dem Rahmen 10 hergestellt wird und gleichzeitig eine Abtrennung längs der Schneidlinie 90.

Bei einem neunten Ausführungsbeispiel, dargestellt in den Fig. 27, 28 und 29 erfolgt basierend auf der Lösung des achten Ausführungsbeispiels zunächst ein Fixieren des Randbereichs 16 des Flachmaterialstücks 14 am Rahmen 10 und Abtrennen des überschüssigen Flachmaterials 13 und anschließend ein Spannen des Flachmaterialstücks 14 über dem vom Rahmen 10 umschlossenen Bereich 12 dadurch, daß ein umgekehrt U-förmiges Aufsatzteil 100 auf den Rahmen 10 aufgesetzt wird, welches einerseits mit seinem Mittenbereich 102 auf der zweiten Seite 26 des Randbereichs 16 auflegbar ist und beim Auflegen des Mittenbereichs 102 mit seiner der zweiten Seite 26 zugewandten Fläche 104 mit einer über den Mittenbereich 102 und über die Seite 104 überstehenden Nase 106 das Flachmaterialstück 14 in seinem Bereich 108 im wesentlichen unmittelbar neben dem Rahmen 10 beaufschlagt und von der Oberseite 18 weg in Richtung der Unterseite 19 bewegt, wie in Fig. 28 dargestellt, und dadurch eine Spannung in einem innerhalb des Rahmens 10 liegenden Innenbereich 110 des Flachmaterialstücks 14 erzeugt, wie in Fig. 29 dargestellt.

Zur Verbindung des Aufsatzteils 100 mit dem Rahmen 10 ist vorzugsweise das Aufsatzteil 100 mit einem über seine Seite 104 überstehenden Energierichtungsgeber 122 versehen, welcher bei Einwirken der Sonotrode 30 auf das Aufsatzteil 100 und zwar auf dessen der Seite 104 abgewandten Seite 112 aufschmilzt und dabei in gleicher Weise wie im Zusammenhang mit den bisherigen Energierichtungsgebern 22 beschrieben, eine Verbindung zwischen dem Aufsatzteil 100 und dem Rahmen 10 herstellt.

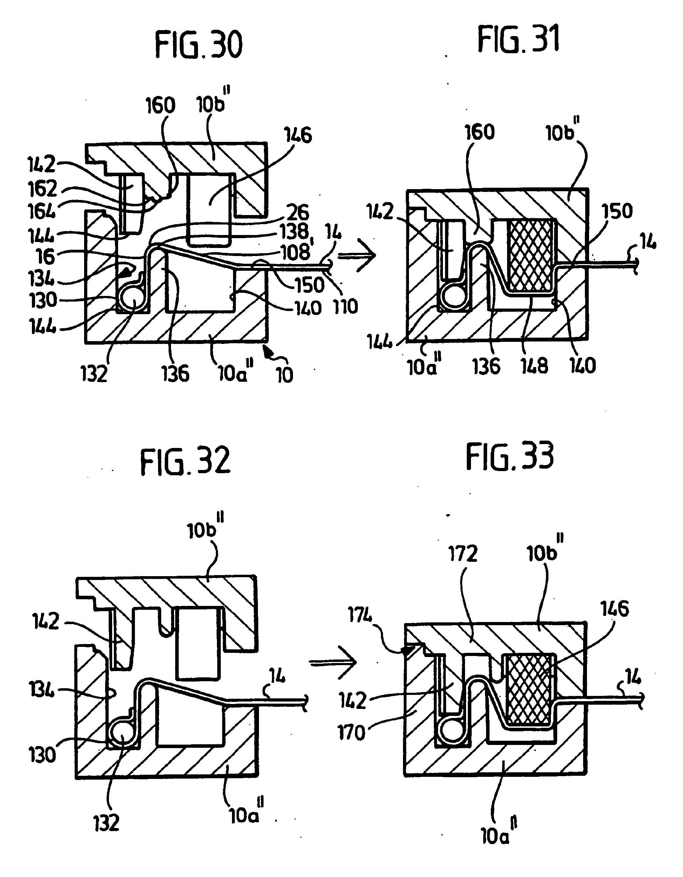

Bei einem zehnten Ausführungsbeispiel, dargestellt in Fig. 30 und 31 umfaßt der Rahmen 10 ein Rahmenteil 10a" und ein Rahmenteil 10b" ähnlich dem zweiten Ausführungsbeispiel.

Im Unterschied zum zweiten Ausführungsbeispiel ist das Flachmaterialstück 14 in seinem Randbereich 16 zu einer Schlaufe 130 umgelegt und in diese Schlaufe 130 ist ein Keder 132 eingelegt, welcher zusammen mit der Schlaufe 130 einen äußersten Rand des Flachmaterialstücks 14 bildet.

Der Keder 132 mit der Schlaufe 130 ist nun in eine Nut 134 des Rahmenteils 10a' einlegbar, die auf Seiten des Innenbereichs 110 durch einen Steg 136 begrenzt ist, über dessen Oberkante 138 der Randbereich 16 des Flachmaterialstücks 14 hinwegverläuft.

Auf der der Nut 134 gegenüberliegenden Seite des Stegs 136 ist eine Vertiefung 140 vorgesehen, über welche sich das Flachmaterialstück 14 mit dem Bereich 108' hinweg erstreckt.

Das Rahmenteil 10b" ist bei diesem Ausführungsbeispiel einerseits mit einem Niederhaltesteg 142 versehen, welcher der Nut 134 gegenüberliegend angeordnet ist und mit seiner Frontseite 144 auf die den Keder 132 umgebende Schlaufe 130 einwirkt und somit die Schlaufe 130 mit dem darinliegenden Keder 132 in Richtung eines Nutgrunds 144 der Nut 134 beaufschlagt.

Ferner ist der Vertiefung 140 gegenüberliegend ein elastischer Spannkörper 146 am Rahmenteilelement 10b" vorgesehen, welcher beim Aufsetzen des Rahmenteilelements 10b" das Flachmaterialstück 14 im Bereich 108' neben dem Steg 136 beaufschlagt und in die Vertiefung 140 unter Ausbildung einer Umwegschlaufe 148 eindrückt, wobei vorzugsweise das Flachmaterialstück 14 ausgehend von der Auflagefläche 138 des Stegs 136 die auf dem Druckkörper 146 aufliegende Umlenkschlaufe 148 bildet und wieder auf einer inneren Auflagefläche 150 des Rahmenteilelements 10a" aufliegt, welche auf einer dem Innenbereich 110 des Flachmaterialstücks zugewandten Seite der Vertiefung 140 angeordnet ist.

Ferner ist das Rahmenteil 10b" noch mit einem fluchtend zum Steg 136 verlaufenden Verbindungssteg 160 versehen, welcher auf seiner dem Steg 136 mit der Auflagefläche 138 zugewandten Seite 162 einen Energierichtungsgeber 164 trägt, welcher bei auf das Rahmenteil 10a" aufgesetztem Rahmenteil 10b" auf der zweiten Seite 26 des Randbereichs 16 der Auflagefläche 138 gegenüberliegend aufliegt.

Wird nun das Rahmenteil 10b" mit einer Sonotrode 30 beaufschlagt, so erfolgt in gleicher Weise wie im Zusammenhang mit dem ersten Ausführungsbeispiel ausführlich erläutert, im Bereich des Energierichtungsgebers 164 das Aufheizen des Kunststoffmaterials und das Aufweichen desselben bis zur Bildung einer Kunststoffschmelze, die das Flachmaterialstück 14 in seinem auf dem Energierichtungsgeber 164 aufliegenden Bereich durchtränkt und somit auch noch den Steg 136 im Bereich der Auflagefläche 138 aufweicht, so daß insgesamt über eine sich im Bereich des Energierichtungsgebers 164 bildende Kunststoffschmelze eine Verbindung zwischen dem Rahmenteilelement 10a" und dem Rahmenteilelement 10b" erfolgt.

Gleichzeitig erfolgt aufgrund der Ausbildung des Spannkörpers 146 aus elastischem Material, beispielsweise Moosgummi, eine elastische ständige Spannung des Flachmaterialstücks 14 in seinem Innenbereich 110 durch eine entsprechend große Ausbildung der Umlenkschleife 148.

Bei einem elften Ausführungsbeispiel, dargestellt in Fig. 32 und 33 umfaßt der Rahmen 10 in gleicher Weise wie beim achten Ausführungsbeispiel die Rahmenteilelemente 10a" und 10b", wobei allerdings der Verbindungssteg 160 nicht vorgesehen ist.

Vielmehr erfolgt lediglich eine Art formschlüssige Fixierung des Flachmaterialstücks 14 über den Keder 132 in der Schlaufe 130, wobei beide durch den Niederhalter 142 in die Nut 134 eingepresst werden.

Die dauerhafte Fixierung der Rahmenteile 10a" und 10b" relativ zueinander erfolgt dabei durch Ultraschallschweißen, beispielsweise im Bereich eines äußeren Wandstegs 170, auf welchem ein den Niederhalter 142 und den Druckkörper 146 tragender Obersteg 172 des Rahmenteilelements 10b" auflegbar ist, so daß unmittelbar zwischen dem Rahmenteil 10a" und dem Rahmenteil 10b" eine Schweißnaht 174 durch erschmolzenen Kunststoff entsteht, welche die beiden Rahmenteile 10a" und 10b" miteinander verbindet, ohne daß ein gleichzeitiges Einbetten oder Einschweißen des Flachmaterialstücks 14 erfolgt. Dieses wird lediglich durch die auf den Keder 132 und die Schlaufe 130 wirkenden Formschlußelemente 134 und 142 gehalten und zusätzlich noch durch den Spannkörper 146 verspannt.

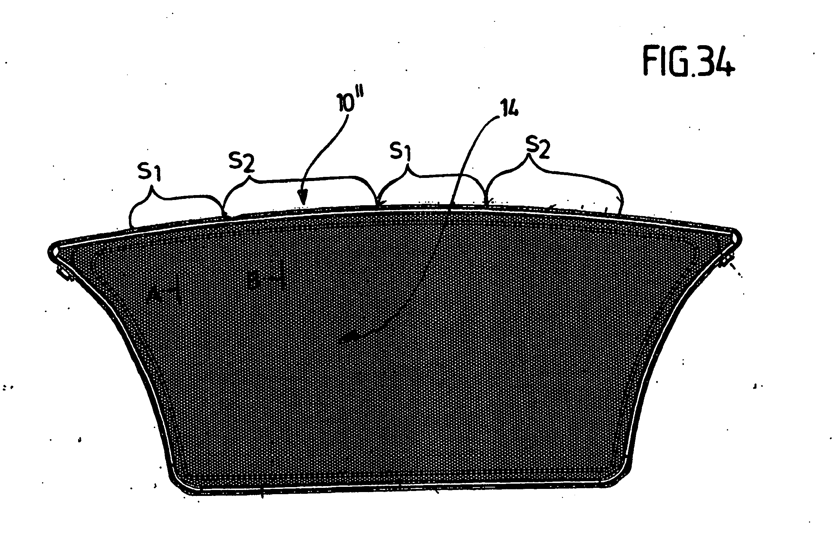

Bei einem zwölften Ausführungsbeispiel, dargestellt in Fig. 34 besteht die Möglichkeit, die Fixierung des Flachmaterialstücks 14 an dem Rahmen 10" in Segmente S1 und S2 zu unterteilen, wobei beispielsweise bei den Segmenten S1 eine Fixierung entsprechend den Fig. 30 und 31 und in den Segmenten S2 eine Fixierung entsprechend den Fig. 32 und 34 erfolgt und die Segmente S1 und S2 sich abwechselnd aufeinanderfolgen.

## Patentansprüche

1. Abschirmelement für Kraftfahrzeuge, insbesondere Windschott oder Sonnenschutz, umfassend einen Rahmen und ein vom Rahmen gehaltenes und sich über einen vom Rahmen umschlossenen Bereich erstreckendes Flachmaterialstück,
**dadurch gekennzeichnet, dass** das Flachmaterialstück (14) dauerhaft am Rahmen (10) **dadurch** fixiert ist, dass mindestens ein Rahmenteilelement (28) aus Kunststoffmaterial durch einen mittels einer Sonotrode (30) aufgeheizten, aufgeweichten und erstarrten Verbindungsbereich (36) des Kunststoffmaterials mit einem Randbereich (16) des Flachmaterialstücks (14) verbunden ist, und dass der Randbereich (16) des Flachmaterialstücks (14) in den durch die Sonotrode (30) aufgeweichten und nachfolgend erstarrten Verbindungsbereich (36) eingebettet ist.

2. Abschirmelement nach Anspruch 1, **dadurch gekennzeichnet, dass** der Randbereich (16) des Flachmaterialstücks (14) an dem Rahmenteilelement (28) in längs einer Verbindungslinie (20) aufeinanderfolgend mit Abstand angeordneten Verbindungsbereichen (36) fixiert ist.

3. Abschirmelement nach Anspruch 2, **dadurch gekennzeichnet, dass** die Verbindungsbereiche (36) in einem Abstand (A) voneinander angeordnet sind, der größenordnungsmäßig der Erstreckung (L) der Verbindungsbereiche (36) in Richtung der Verbindungslinie (20) entspricht.

4. Abschirmelement nach einem der voranstehenden Ansprüche, **dadurch gekennzeichnet, dass** die Verbindungsbereiche (36) durch Kunststoffmaterialanhäufungen (22, 54, 56) vorgegeben sind.

5. Abschirmelement nach Anspruch 7, **dadurch gekennzeichnet, dass** das Rahmenteilelement (28) mit den die Verbindungsbereiche (36) bildenden Kunststoffmaterialanhäufungen (46) versehen ist.

6. Abschirmelement nach einem der voranstehenden Ansprüche, **dadurch gekennzeichnet, dass** der Randbereich (16) des Flachmaterials (14) nur in den längs der Verbindungslinie (20) aufeinanderfolgenden Verbindungsbereichen (36) an dem Rahmenteilelement (28) dauerhaft fixiert ist.

7. Abschirmelement nach einem der voranstehenden Ansprüche, **dadurch gekennzeichnet, dass** das andere Teil ein weiteres Rahmenteilelement (28) des Rahmens (10) ist und dass die Rahmenteilelemente (28) durch einen durch Aufheizen und Aufweichen und Erstarren des Kunststoffmaterials mittels der Sonotrode (30) gebildeten Verbindungsbereich (46') dauerhaft miteinander verbunden sind.

8. Abschirmelement nach einem der voranstehenden Ansprüche, **dadurch gekennzeichnet, dass** der Randbereich(16) das Flachmaterialstücks (14) durch Formschlusselemente (46", 50, 62, 64) mit dem Windschottrahmen (10) verbunden ist.

9. Abschirmelement nach Anspruch 8, **dadurch gekennzeichnet, dass** das dem Flachmaterialstück (14) zugeordnete Formschlusselement (64) in eine Randverstärkung des Flachmaterials (14) integriert ist.

10. Abschirmelement nach Anspruch 8 oder 9, **dadurch gekennzeichnet, dass** das Flachmaterialstück (14) in seinem Randbereich (16) als Durchbrüche (64) ausgebildete Formschlusselemente aufweist.

11. Abschirmelement nach Anspruch 9 oder 10, **dadurch gekennzeichnet, dass** die Durchbrüche (64) von an mindestens einem der Rahmenteilelemente (28) gehaltenen Formschlusselementen (46", 62) durchsetzt sind.

12. Abschirmelement nach einem der voranstehenden Ansprüche, **dadurch gekennzeichnet, dass** der Rahmen (10) längs einer Trennfläche von gegenüberliegenden Seiten derselben aneinander anstoßende Rahmenteile (10a, 10b) aufweist und der Randbereich (16) des Flachmaterialstücks (14) zwischen diesen gehalten ist.

13. Abschirmelement nach Anspruch 12, **dadurch gekennzeichnet, dass** das Flachmaterialstück (14) durch sich zwischen den zwei Rahmenteilen (10a, 10b) erstreckende Formschlusselemente (46", 50, 62, 64) gehalten ist.

14. Abschirmelement nach Anspruch 12 oder 13, **dadurch gekennzeichnet, dass** die Formschlusselemente durch die Rahmenteile (10a, 10b) verbindende und durch Aufweichen und Erstarren des Kunststoffmaterials entstandene Verbindungsbereiche (46, 46") gebildet sind.

15. Abschirmelement nach Anspruch 14 , **dadurch gekennzeichnet, dass** die Durchbrüche (64) im Randbereich (16) des Flachmaterialstücks (14) beim Aufschmelzen des Kunststoffmaterials zur Bildung der Verbindungsbereiche (36) durch Erhitzen des das Flachmaterialstück (14) bildenden Materials entstanden sind.

16. Abschirmelement nach Anspruch 12 oder 13, **dadurch gekennzeichnet, dass** Verbindungsbereiche (174) zur dauerhaften Verbindung der Rahmenteile (10a, 10b) unmittelbar zwischen den Rahmenteilen (10a, 10b) und berührungsfrei relativ zu dem Randbereich (16) des Flachmaterialstücks (14) angeordnet sind.

17. Abschirmelement nach einem der voranstehenden Ansprüche, **dadurch gekennzeichnet, dass** das Flachmaterialstück (14) und der Rahmen (10) mit Vorspannung relativ zueinander fixiert sind.

18. Abschirmelement nach einem der Ansprüche 1 bis 16, **dadurch gekennzeichnet, dass** das Flachmaterialstück (14) durch einen an dem Rahmen (10) gehaltenen Spannkörper (106, 146) gespannt ist.

19. Abschirmelement nach Anspruch 18, **dadurch gekennzeichnet, dass** der Spannkörper (106) an einem an dem Rahmen (10) fixierten Aufsatzteil (100) angeordnet ist.

20. Abschirmelement nach Anspruch 18, **dadurch gekennzeichnet, dass** der Spannkörper (146) an einem von zwei Rahmenteilen angeordnet ist.

21. Abschirmelement nach Anspruch 20, **dadurch gekennzeichnet, dass** der Spannkörper (146) elastisch ausgebildet ist.

22. Verfahren zum Herstellen eines Abschirmelements für Kraftfahrzeuge insbesondere eines Windschotts oder Sonnenschutzes, umfassend einen Rahmen und ein vom Rahmen gehaltenes und sich über einen vom Rahmen umschlossenen Bereich erstreckendes Flachmaterialstück, **dadurch gekennzeichnet, dass** das Flachmaterialstück dauerhaft am Rahmen **dadurch** fixiert wird, dass mindestens ein Rahmenteilelement aus Kunststoffmaterial durch einen mittels einer Sonotrode aufgeheizten, aufgeweichten und erstarrten Verbindungsbereich des Kunststoffmaterials mit einem Randbereich des Flachmaterialstücks verbunden wird, und dass der Randbereich des Flachmaterialstücks in den durch die Sonotrode aufgeweichten und nachfolgend erstarrten Verbindungsbereich eingebettet wird.

23. Verfahren nach Anspruch 22, **dadurch gekennzeichnet, dass** der Randbereich des Flachmaterialstücks an dem Rahmenteilelement in längs einer Verbindungslinie aufeinanderfolgend mit Abstand angeordneten Verbindungsbereichen fixiert wird.

24. Verfahren nach Anspruch 23, **dadurch gekennzeichnet, dass** das andere Teil ein weiteres Rahmenteilelement des Rahmens ist und dass die Rahmenteilelemente durch einen durch Aufheizen, Aufweichen und Erstarren des Kunststoffmaterials mittels der Sonotrode gebildeten Verbindungsbereich miteinander verbunden werden.

25. Verfahren nach einem der Ansprüche 22 bis 24, **dadurch gekennzeichnet, dass** der Rahmen aus längs einer Trennfläche von gegenüberliegenden Seiten derselben aneinander anstoßenden Rahmenteilen gebildet wird, zwischen denen der Randbereich des Flachmaterialstücks angeordnet wird.

26. Verfahren nach einem der Ansprüche 22 bis 25, **dadurch gekennzeichnet, dass** das Flachmaterialstück und der Rahmen mit Vorspannung relativ zueinander fixiert werden.

27. Verfahren nach einem der Ansprüche 22 bis 26, **dadurch gekennzeichnet, dass** das Flachmaterialstück durch Anordnen eines Spannkörpers an dem Rahmen gespannt wird.

28. Verfahren nach einem der Ansprüche 22 bis 27, **dadurch gekennzeichnet, dass** über den Rahmen überstehendes Flachmaterial bei Einwirken der Sonotrode auf das Rahmenteilelement mittels einer Schneidkante abgetrennt wird.

## Claims

1. Screen element for motor vehicles, in particular, wind blocker or sunscreen, comprising a frame and a piece of flat material held by the frame and extending over an area enclosed by the frame, **characterized in that** the piece of flat material (14) is fixed permanently to the frame (10) by at least one frame part element (28) consisting of a plastic material being connected to an edge area (16) of the piece of flat material (14) by a connecting area (36) of the plastic material heated up by means of a sonotrode (30), softened and hardened, and by the edge area (16) of the piece of flat material (14) being embedded in the connecting area (36) softened by the sonotrode (30) and subsequently hardened.

2. Screen element in accordance with claim 1, **characterized in that** the edge area (16) of the piece of flat material (14) is fixed to the frame part element (28) in connecting areas (36) arranged so as to follow one another at a distance along a connecting line (20).

3. Screen element in accordance with claim 2, **characterized in that** the connecting areas (36) are arranged at a distance (A) from one another, which corresponds in its order of magnitude to the extent (L) of the connecting areas (36) in the direction of the connecting line (20).

4. Screen element in accordance with any one of the preceding claims, **characterized in that** the connecting areas (36) are predetermined by plastic material agglomerations (22, 54, 56).

5. Screen element in accordance with claim 7, **characterized in that** the frame part element (28) is provided with the plastic material agglomerations (46) forming the connecting areas (36).

6. Screen element in accordance with any one of the preceding claims, **characterized in that** the edge area (16) of the flat material (14) is permanently fixed to the frame part element (28) only in the connecting areas (36) following one another along the connecting line (20).

7. Screen element in accordance with any one of the preceding claims, **characterized in that** the other part is a further frame part element (28) of the frame (10), and **in that** the frame part elements (28) are permanently connected to one another by a connecting area (46') formed by heating up and softening and hardening the plastic material with the sonotrode (30).

8. Screen element in accordance with any one of the preceding claims, **characterized in that** the edge area (16) of the piece of flat material (14) is connected to the wind blocker frame (10) by form-locking elements (46", 50, 62, 64).

9. Screen element in accordance with claim 8, **characterized in that** the form-locking element (64) associated with the piece of flat material (14) is integrated into an edge reinforcement of the flat material (14).

10. Screen element in accordance with claim 8 or 9, **characterized in that** the piece of flat material (14) has form-locking elements formed as openings (64) in its edge area (16).

11. Screen element in accordance with claim 9 or 10, **characterized in that** the openings (64) are penetrated by form-locking elements (46", 62) held on at least one of the frame part elements (28).

12. Screen element in accordance with any one of the preceding claims, **characterized in that** the frame (10) has frame parts (10a, 10b) abutting on one another along a dividing surface from opposite sides thereof, and the edge area (16) of the piece of flat material (14) is held between these.

13. Screen element in accordance with claim 12, **characterized in that** the piece of flat material (14) is held by form-locking elements (46", 50, 62, 64) extending between the two frame parts (10a, 10b).

14. Screen element in accordance with claim 12 or 13, **characterized in that** the form-locking elements are formed by connecting areas (46, 46") connecting the frame parts (10a, 10b) and resulting from softening and hardening of the plastic material.

15. Screen element in accordance with claim 14, **characterized in that** the openings (64) in the edge area (16) of the piece of flat material (14) have resulted form the melting of the plastic material for formation of the connecting areas (36) due to heating of the material forming the piece of flat material (14).

16. Screen element in accordance with claim 12 or 13, **characterized in that** for permanent connection of the frame parts (10a, 10b) connecting areas (174) are arranged directly between the frame parts (10a, 10b) and free from contact relative to the edge area (16) of the piece of flat material (14).

17. Screen element in accordance with any one of the preceding claims, **characterized in that** the piece of flat material (14) and the frame (10) are fixed relative to one another with initial tension.

18. Screen element in accordance with any one of claims 1 to 16, **characterized in that** the piece of flat material (14) is clamped by a clamping member (106, 146) held on the frame (10).

19. Screen element in accordance with claim 18, **characterized in that** the clamping member (106) is arranged on an attachment part (100) fixed to the frame (10).

20. Screen element in accordance with claim 18, **characterized in that** the clamping member (146) is arranged on one of two frame parts.

21. Screen element in accordance with claim 20, **characterized in that** the clamping member (146) is of elastic construction.

22. Process for the production of a screen element for motor vehicles, in particular, a wind blocker or sunscreen, comprising a frame and a piece of flat material held by the frame and extending over an area enclosed by the frame, **characterized in that** the piece of flat material is fixed permanently to the frame by at least one frame part element consisting of a plastic material being connected to an edge area of the piece of flat material by a connecting area of the plastic material heated up by means of a sonotrode, softened and hardened, and by the edge area of the piece of flat material being embedded in the connecting area softened by the sonotrode and subsequently hardened.

23. Process in accordance with claim 22, **characterized in that** the edge area of the piece of flat material is fixed to the frame part element in connecting areas arranged so as to follow one another at a distance along a connecting line.

24. Process in accordance with claim 23, **characterized in that** the other part is a further frame part element of the frame, and **in that** the frame part elements are connected to one another by a connecting area formed by heating up, softening and hardening the plastic material with the sonotrode.

25. Process in accordance with any one of claims 22 to 24, **characterized in that** the frame is formed by frame parts which abut on one another along a dividing surface from opposite sides thereof and between which the edge area of the piece of flat material is arranged.

26. Process in accordance with any one of claims 22 to 25, **characterized in that** the piece of flat material and the frame are fixed relative to one another with initial tension.

27. Process in accordance with any one of claims 22 to 26, **characterized in that** the piece of flat material is clamped to the frame by arrangement of a clamping member.

28. Process in accordance with any one of claims 22 to 27, **characterized in that** flat material projecting beyond the frame is cut off by a cutting edge when the sonotrode acts on the frame part element.

## Revendications

1. Elément de blindage pour véhicules automobiles, en particulier filet anti-remous ou pare-soleil, comprenant un cadre et une pièce plate maintenue par le cadre et s'étendant sur une zone entourée par le cadre,
**caractérisé en ce que** la pièce plate (14) est fixée durablement au cadre (10) par le fait qu'au moins un élément de partie de cadre (28) en plastique est relié à une zone de bord (16) de la pièce plate (14) par une zone de jonction (36) de plastique chauffée, ramollie et solidifiée à l'aide d'une sonotrode (30) et que la zone de bord (16) de la pièce plate (14) est encastrée dans la zone de jonction (36) ramollie et ensuite solidifiée par la sonotrode (30).

2. Elément de blindage selon la revendication 1, **caractérisé en ce que** la zone de bord (16) de la pièce plate (14) est fixée au niveau de l'élément de partie de cadre (28) dans des zones de jonction (36) agencées à distance les unes après les autres le long d'une ligne de jonction (20).

3. Elément de blindage selon la revendication 2, **caractérisé en ce que** les zones de jonction (36) sont agencées à une distance (A) les unes des autres, qui correspond du point de vue de l'ordre de grandeur à la longueur (L) des zones de jonction (36) dans le sens de la ligne de jonction (20).

4. Elément de blindage selon l'une quelconque des revendications précédentes, **caractérisé en ce que** les zones de jonction (36) sont prédéfinies par des accumulations de plastique (22, 54, 56).

5. Elément de blindage selon la revendication 7, **caractérisé en ce que** l'élément de partie de cadre (28) est doté des accumulations de plastique (46) formant les zones de jonction (36).

6. Elément de blindage selon l'une quelconque des revendications précédentes, **caractérisé en ce que** la zone de bord (16) du plat (14) est fixée durablement au niveau de l'élément de partie de cadre (28) uniquement dans les zones de jonction (36) se suivant les unes les autres le long de la ligne de jonction (20).

7. Elément de blindage selon l'une quelconque des revendications précédentes, **caractérisé en ce que** l'autre partie est un autre élément de partie (28) du cadre (10) et **en ce que** les éléments de partie de cadre (28) sont reliés durablement l'un à l'autre par une zone de jonction (46') formée par chauffage et ramollissement et solidification du plastique à l'aide de la sonotrode (30).

8. Elément de blindage selon l'une quelconque des revendications précédentes, **caractérisé en ce que** la zone de bord (16) de la pièce plate (14) est reliée au cadre du filet anti-remous (10) par des éléments à correspondance de forme (46", 50, 62, 64).

9. Elément de blindage selon la revendication 8, **caractérisé en ce que** l'élément à correspondance de forme (64) associé à la pièce plate (14) est intégré dans un renforcement de bord de la pièce plate (14).

10. Elément de blindage selon la revendication 8 ou 9, **caractérisé en ce que** la pièce plate (14) présente dans sa zone de bord (16), des éléments à correspondance de forme réalisés sous forme d'ouvertures (64).

11. Elément de blindage selon la revendication 9 ou 10, **caractérisé en ce que** les ouvertures (64) sont traversées par des éléments à correspondance de forme (46", 62) maintenus au niveau d'au moins un des éléments de partie de cadre (28).

12. Elément de blindage selon l'une quelconque des revendications précédentes, **caractérisé en ce que** le cadre (10) présente des parties de cadre (10a, 10b) butant l'une contre l'autre le long d'une surface de séparation de ses côtés opposés et la zone de bord (16) de la pièce plate (14) est maintenue entre celles-ci.

13. Elément de blindage selon la revendication 12, **caractérisé en ce que** la pièce plate (14) est maintenue par des éléments à correspondance de forme (46", 50, 62, 64) s'étendant entre les deux parties de cadre (10a, 10b).

14. Elément de blindage selon la revendication 12 ou 13, **caractérisé en ce que** les éléments à correspondance de forme sont formés par des zones de jonction (46, 46") reliant les parties de cadre (10a, 10b) et produites par ramollissement et solidification du plastique.

15. Elément de blindage selon la revendication 14, **caractérisé en ce que** les ouvertures (64) ont été produites dans la zone de bord (16) de la pièce plate (14) lors de la fusion du plastique pour former les zones de jonction (36) par chauffage du matériau formant la pièce plate (14).

16. Elément de blindage selon la revendication 12 ou 13, **caractérisé en ce que** les zones de jonction (174) sont agencées pour la liaison durable des parties de cadre (10a, 10b) directement entre les parties de cadre (10a, 10b) et sans contact par rapport à la zone de bord (16) de la pièce plate (14).

17. Elément de blindage selon l'une quelconque des revendications précédentes, **caractérisé en ce que** la pièce plate (14) et le cadre (10) sont fixés l'un par rapport à l'autre par précontrainte.

18. Elément de blindage selon l'une quelconque des revendications 1 à 16, **caractérisé en ce que** la pièce plate (14) est serrée par un corps de serrage (106, 146) maintenu au niveau du cadre (10).

19. Elément de blindage selon la revendication 18, **caractérisé en ce que** le corps de serrage (106) est agencé au niveau d'un élément rapporté (100) fixé au niveau du cadre (10).

20. Elément de blindage selon la revendication 18, **caractérisé en ce que** le corps de serrage (146) est agencé au niveau d'une des deux parties de cadre.

21. Elément de blindage selon la revendication 20, **caractérisé en ce que** le corps de serrage (146) est réalisé de manière élastique.

22. Procédé de fabrication d'un élément de blindage pour véhicules automobiles, en particulier d'un filet anti-remous ou pare-soleil, comprenant un cadre et une pièce plate maintenue par le cadre et s'étendant sur une zone entourée par le cadre, **caractérisé en ce que** la pièce plate est fixée durablement au cadre par le fait qu'au moins un élément de partie de cadre en plastique est relié à une zone de bord de la pièce plate par une zone de jonction de plastique chauffée, ramollie et solidifiée à l'aide d'une sonotrode et que la zone de bord de la pièce plate est encastrée dans la zone de jonction ramollie et ensuite solidifiée par la sonotrode.

23. Procédé selon la revendication 22, **caractérisé en ce que** la zone de bord de la pièce plate est fixée au niveau de l'élément de partie de cadre dans des zones de jonction agencées à distance les unes après les autres le long d'une ligne de jonction.

24. Procédé selon la revendication 23, **caractérisé en ce que** l'autre partie est un autre élément de partie du cadre et **en ce que** les éléments de partie de cadre sont reliés l'un à l'autre par une zone de jonction formée par chauffage, ramollissement et solidification du plastique à l'aide de la sonotrode.

25. Procédé selon l'une quelconque des revendications 22 à 24, **caractérisé en ce que** le cadre est formé de parties de cadre butant l'une contre l'autre le long d'une surface de séparation de ses côtés opposés, entre lesquelles la zone de bord de la pièce plate est maintenue.

26. Procédé selon l'une quelconque des revendications 22 à 25, **caractérisé en ce que** la pièce plate et le cadre sont fixés l'un par rapport à l'autre par précontrainte.

27. Procédé selon l'une quelconque des revendications 22 à 26, **caractérisé en ce que** la pièce plate est serrée par l'agencement d'un corps de serrage (106, 146) au niveau du cadre.

28. Procédé selon l'une quelconque des revendications 22 à 27, **caractérisé en ce que** la pièce plate en saillie du cadre est séparée lors de l'action de la sonotrode sur l'élément de partie de cadre à l'aide d'une arête de coupe.
